# EUROPÄISCHE PATENTSCHRIFT

(11) **EP 1 715 216 B1**
(45) Veröffentlichungstag und Bekanntmachung des Hinweises auf die Patenterteilung: **11.07.2018**
(21) Anmeldenummer: 06007655.1
(22) Anmeldetag: 12.04.2006
(51) Int. Cl.: F16F 15/137, F16F 15/16, F16D 3/12

(54) **Torsionsschwingungsdämpfer**
Torsional vibration damper
Amortisseur de vibrations torsionelles

(30) Priorität: 23.04.2005 DE 102005018954
(43) Veröffentlichungstag der Anmeldung: 25.10.2006
(73) Patentinhaber: ZF Friedrichshafen AG, 88046 Friedrichshafen (DE)
(72) Erfinder: Bach, Hartmut, 97422 Schweinfurt (DE); Dögel, Thomas, 97688 Bad Kissingen (DE); Kister, Igor, 97076 Würzburg (DE)

(56) Entgegenhaltungen:
- FR-A1- 2 626 337
- US-A- 3 837 181
- US-A- 4 173 158

## Beschreibung

Die Erfindung betrifft einen Torsionsschwingungsdämpfer gemäß dem Oberbegriff des Anspruchs 1.

Durch die DE 102 56 191 A1 ist ein Torsionsschwingungsdämpfer mit einem antriebsseitiges Übertragungselement, einem gegenüber demselben um eine im wesentlichen identische Drehachse drehauslenkbares abtriebsseitigen Übertragungselement und einer zwischen den beiden Übertragungselementen vorgesehenen Dämpfungseinrichtung bekannt. Das antriebsseitige Übertragungselement ist mit einem Antrieb, wie einer Kurbelwelle einer Brennkraftmaschine verbunden, während das abtriebsseitige Übertragungselement über eine Kopplungsvorrichtung, beispielsweise durch eine ein- oder ausrückbare Reibungskupplung gebildet, mit einem Abtrieb, wie einer Getriebeeingangswelle, in Wirkverbindung bringbar ist. Die Dämpfungseinrichtung ist sowohl mit einem Gasfedersystem, aufweisend eine Mehrzahl von Gasfedern, und einem Zusatzfedersystem, enthaltend eine Mehrzahl von Stahlfedern, zur Übertragung eines Drehmomentes zwischen dem antriebsseitigen und dem abtriebsseitigen Übertragungselement versehen. Während die Stahlfedern in bekannter Weise durch Verformung bei Torsionsschwingungen harte Stöße jeweils in einen weicheren Schwingungsvorgang umformen, dienen die Gasfedern zu einem Dämpfungsvorgang, bei welchem Stoßenergie abgebaut wird. Hierzu verfügen die Gasfedern jeweils über einen ein gasförmiges Medium, wie Luft, enthaltenden Speicherraum innerhalb eines Zylinderraums, wobei dieses gasförmige Medium bei Kompression der Gasfedern und dadurch bedingter Volumenreduzierung des Speicherraums über eine Drosselöffnung aus dem Speicherraum herausgepresst wird. Verständlicherweise wird bei Entlastung der Gasfeder und damit verbundener Volumenerhöhung im Speicherraum aus der Umgebung der Gasfeder wieder frisches gasförmiges Medium über die Drosselöffnung nachgesaugt. Damit ist eine geschwindigkeitsproportionale Dämpfung realisierbar, und zwar ohne spezielle Dichtungserfordernisse.

Bei dem bekannten Gasfedersystem ergibt sich der Druck im Speicherraum und damit das Dämpfungsverhalten durch den jeweiligen Verformungszustand, und wird daher in Fachkreisen als "passives" Gasfedersystem bezeichnet. Die Drosselöffnung wird für sämtliche denkbaren Lastzustände ausgelegt sein, und kann demnach lediglich einen Kompromiss bilden. Das gleiche Problem ergibt sich auch bei den Stahlfedern, die bezüglich ihrer Kennlinie nur kompromißbehaftet an die im Betrieb auftretenden unterschiedlichen Lastzustände anpassbar sind.

Um diesem Problem bei den Stahlfedern entgegen zu wirken, zeigt die DE 41 28 868 A1 die Möglichkeit auf, bei einer Mehrzahl von in Umfangsrichtung hintereinander angeordneten Stahlfedern die einzelnen Stahlfedern mit unterschiedlichen Kennlinien abzustimmen, so dass bei Einleitung kleiner Drehmomente lediglich die Stahlfedern niedrigeren Kennlinien komprimiert werden, und erst mit zunehmendem Drehmoment auch die Stahlfedern mit höheren Kennlinien bezüglich ihrer Kompression folgen. Problematisch gestaltet sich hierbei allerdings die Drehzahlabhängigkeit der Stahlfedern, da deren Windungen mit zunehmender Fliehkraft nach radial außen gepresst werden, und sich dort verhaken. Torsionsschwingungen führen dadurch nicht zwingend zur Kompression der in Einleitungsrichtung der Torsionsschwingung benachbarten Stahlfeder, so dass die Dämpfungseinrichtung zunächst überhaupt keine Dämpfungswirkung erbringt. Erst höhere Lastzustände vermögen schließlich ein Lösen der Stahlfeder von ihrer radial äußeren Anlage zu bewirken, was als komfortmindernder Ruck im Fahrzeug empfunden wird, um allerdings bei der in Umfangsrichtung benachbarten Stahlfeder, die mit einer höheren Kennlinie ausgebildet sein kann, zunächst wieder aufzulaufen, bis auch diese Stahlfeder bei nochmals höherem Lastzustand von ihrer radial äußeren Anlage losgerissen wird. Im Gesamtergebnis steht demnach bei einer derartigen Betriebsweise nie das gesamte Federvolumen zur Verfügung, sondern stets nur ein Teil hiervon. Dieses Problem lässt sich durch die bei der DE 41 28 868 A1 vorgesehenen Schiebeelemente zwischen den Stahlfedern und deren radial äußerer Anlage zwar günstig beeinflussen, aber nicht vermeiden. Insofern ergibt sich bei derartigen Torsionsschwingungsdämpfern einerseits eine unzureichende Entkoppelungsgüte, und andererseits aufgrund hoher Steifigkeiten in der Dämpfungseinrichtung eine Eigenfrequenz in einem beim Fahren vergleichsweise häufig genutzten Drehzahlbereich. Besonders kritisch ist hierbei der untere Drehzahlbereich zwischen im wesentlichen 1000 und 2000 Umdrehungen/Minute bei gleichzeitig hohem Motormoment und entsprechend hohen Anregungen von Torsionsschwingungen, wodurch im Fahrzeug Brummgeräusche entstehen.

Der Erfindung liegt die Aufgabe zugrunde, die Dämpfungseinrichtung eines Torsionsschwingungsdämpfers derart auszubilden, dass unerwünschte Brummgeräusche auch unter Extrembedingungen vermeidbar sind.

Diese Aufgabe wird gemäß dem Anspruch 1 gelöst. Durch Anschluss des Speicherraums des Gasfedersystems an einen Druckkreis entsteht hierbei ein "aktives" Gasfedersystem, welches anspruchsgemäß die Möglichkeit bietet, bei einer Änderung des von dem Gasfedersystem zu übertragenden Drehmomentes mittels einer Neueinstellung des im Speicherraum anliegenden Druckes zumindest im Wesentlichen eine Anpassung der Kennlinie des Gasfedersystems an das geänderte Drehmoment auszulösen. In Fachkreisen wird hierbei zwischen "vollaktiven" und "teilaktiven" Gasfedersystemen unterschieden, wobei im Fall vollaktiver Gasfedersysteme bei jeglicher Änderung des fahrbedingten Motormoments sofort durch Zuführung gasförmigen Mediums in den Speicherraum oder durch Abführung dieses Mediums aus dem Speicherraum nachgeregelt wird, während im Fall teilaktiver Gasfedersysteme nur bei großen Änderungen des Motormoments eine Nachregelung erfolgt, ansonsten das Gasfedersystem aber vergleichbar mit einem passiven Gasfedersystem ohne Nachregelung betrieben wird. Die teilaktiven Gasfedersysteme verfügen demnach, verglichen mit den vollaktiven Systemen, aufgrund der deutlich reduzierten Anzahl von Regelvorgängen mit zudem eingeschränktem Erfordernis einer hohen Nachregelgeschwindigkeit über den Vorteil, mit gegenüber den vollaktiven Systemen geringeren Strömungsgeschwindigkeiten bei der Verlagerung gasförmigen Mediums zwischen dem Druckkreis und dem Speicherraum arbeiten zu können. Dadurch bedingt, zeichnen sich teilaktive Gasfedersysteme durch einen geringen Energiebedarf sowie das Erfordernis nur begrenzt leistungsfähiger Speicher für gasförmiges Medium oder gar durch den völligen Verzicht auf Speicher aus. Gering kann bei teilaktiven Gasfedersystemen auch die Pumpenleistung sein, wobei im Pumpbetrieb etwa 500 Watt genügen können.

Mit Vorzug wird eine Anpassung der Kennlinie des Gasfedersystems an ein geändertes Drehmoment durch Neueinstellung des im Speicherraum des Gasfedersystems anliegenden Druckes in Abhängigkeit von fahrzeug- und/oder fahrzustandsrelevanter Bedingungen, vorgenommen. Arbeitet hierbei der Druckkreis mit einer Steuerungs- und/oder Regelungsvorrichtung, nachfolgend kurz als "Regelung" bezeichnet, zusammen, so kann diese Regelung beispielsweise auf in der Fahrzeugsteuerung abgelegte Betriebspunkte zurückgreifen und demnach eine stets den jeweiligen fahrzeug- und/oder fahrzustandsrelevanten Bedingungen zugeordnete Versorgung des Speicherraums mit gasförmigem Medium, wie beispielsweise mit Luft, bewirken. Aufgrund des somit im Speicherraum enthaltenen Überdruckes gegenüber der Umgebung des Torsionsschwingungsdämpfers erfolgt jeweils die Einstellung der Kennlinie des Gasfedersystems. Dadurch steht für jedes anliegende Drehmoment, das bei Zugbetrieb von einem Antrieb, wie der Kurbelwelle einer Brennkraftmaschine, und bei Schubbetrieb von einem Abtrieb, wie einer Getriebeeingangswelle, in den Torsionsschwingungsdämpfer eingeleitet wird, stets eine diesem Drehmoment entsprechende Kennlinie im Gasfedersystem zur Verfügung, so dass jederzeit zumindest im wesentlichen der volle Kompressionsweg des Gasfedersystems verfügbar ist. Im Gegensatz zu rein passiv wirksamen Federsystemen, deren Kennlinie derart abgestimmt ist, dass sie mit dem verfügbaren Federweg beginnend bei kleinen Drehmomenten bereits eine Relativauslenkung von Übertragungselementen ermöglichen, bei maximalen Drehmomenten aber immer noch diesen Federweg zur Verfügung haben, liegt bei dem erfindungsgemäßen aktiven Gasfedersystem durch die Anpassung der Kennlinie an das jeweilige Drehmoment praktisch eine "virtuelle" Vervielfachung des Federweges vor. Entsprechend hoch ist die Entkopplungsgüte dieses Torsionsschwingungsdämpfers, und entsprechend niedrig seine Eigenfrequenz, die außerhalb des typischen Drehzahlbereichs eines Fahrzeuges bei den üblichen Fahrbedingungen liegt.

Sollte trotz der zuvor erwähnten geringen Eigenfrequenz des Torsionsschwingungsdämpfers einmal ein Resonanzverhalten auftreten, kann der Druck im Speicherraum auf ein Niveau angehoben oder auf einem Niveau gehalten werden, bei welchem eine Relativdrehbewegung der zueinander verdrehbaren Übertragungselemente des Torsionsschwingungsdämpfers zumindest weitgehend vermieden wird. Eine Schädigung der Dämpfungseinrichtung wird dadurch wirksam vermieden.

Trotz des beim erfindungsgemäßen Torsionsschwingungsdämpfer bezüglich seiner Wirkung extrem großen Federweges ist der tatsächliche Bauraumbedarf des Gasfedersystems ebenso wie dessen Massenträgheitsmoment gering. Ungeachtet dieses ohnehin vorhandenen Vorteils kann der Federweg ohne Verlust der vorgenannten Vorteile noch weiter vergrößert werden, indem ein dem Druckkreis des Gasfedersystems zugeordneter, wirkungsmäßig den Speicherraum des Gasfedersystems vergrößernder Zusatzspeicherraum zur Verfügung gestellt wird, der, in Druckverbindung mit dem Speicherraum stehend, eine deutliche Vergrößerung des Wirkvolumens des letztgenannten ermöglicht, ohne hierfür, sofern räumlich außerhalb des Erstreckungsbereichs des Torsionsschwingungsdämpfers und mit Vorzug sogar in einem ortsfesten Bereich des Fahrzeugs vorgesehen, eine Bauraumvergrößerung am Torsionsschwingungsdämpfer oder eine Erhöhung von dessen Massenträgheitsmoment - zu verursachen. Entsprechend gering bei einem derart großen Wirkvolumen des um den Zusatzspeicherraum vergrößerten Speicherraums ist die an das jeweilige Drehmoment angepasste Federsteifigkeit, so dass eine extreme Entkopplungsgüte erzielbar ist. Die hierdurch erzielte Volumenvergrößerung des Speicherraums erfolgt aufgrund der geringen Masse des zwischen Speicherraum und Zusatzspeicherraum bewegten gasförmigen Mediums nahezu trägheitsfrei.

In sehr vorteilhafter Ausführung ist dem Zusatzspeicherraum ein Schwingkompressor zugeordnet. Mit diesem Schwingkompressor ist es möglich, Gasdruckschwankungen gezielt zu erzeugen, um hierdurch Relativbewegungen zwischen einem den Speicherraum umfassenden Zylinderraum und einem Kolben des Gasfedersystems beim Überwinden der wirksamen Reibung zu unterstützen. Dieser Vorteil kann ausgebaut werden, indem durch den Schwingkompressor bei entsprechender Ansteuerung desselben durch die Regelung eine Funktionalität im Sinne einer auf kurzem Weg wirksamen, ergänzenden Pumpe erzeugt wird, und damit eine Drucksteigerung in Speicherraum und Zusatzspeicherraum erzielbar ist, und zwar unabhängig von der eigentlichen Pumpe und/oder von mit derselben zusammenwirkenden Speichern für gasförmiges Medium.

Durch den Schwingkompressor können darüber hinaus mittels Gasdruckschwankungen häufige Änderungen bezüglich der Steifigkeit des Gasfedersystems erzielt werden, mit denen sich die Ausbildung einer Resonanz am Torsionsschwingungsdämpfer unterdrücken lässt. Sollte sich dennoch eine Resonanz ausbilden, ist dem Schwingkompressor vorteilhafterweise ein Stellglied, mit Vorzug als Ventil ausgebildet, zugeordnet, das zur Durchführung von Regulierungsfunktionen an die Regelung angeschlossen ist. Wird dieses Stellglied bei Resonanz oder zumindest starken Lastwechseln geschlossen, bleibt im Gasfedersystem unverändert ein Druckniveau erhalten, welches eine hohe Steifigkeit simuliert und dadurch maximale Relativdrehauslenkungen zwischen den beiden Übertragungselementen verhindern soll. Der Schwingkompressor kann als Hubkolbenkompressor ausgebildet sein.

Die Herstellung einer Druckverbindung zwischen einem zumindest im wesentlichen ortsfesten Druckkreis, gegebenenfalls mit Ausbildung desselben mit dem Zusatzspeicherraum, und den jeweils zu einer Drehbewegung um eine Drehachse befähigten Übertragungselementen des Torsionsschwingungsdämpfers, damit also dem Gasfedersystem, erfolgt vorteilhafterweise mittels zumindest einer Drehdurchführung. Diese kann entweder dem Antrieb oder aber dem Abtrieb zugeordnet sein.

Der Vorteil einer Zuordnung zum Antrieb besteht in der Begrenzung auf lediglich eine Drehdurchführung. Diese kann beispielsweise in einem Flansch eines Rotationsteils des Antriebs, also der Kurbelwelle, ausgebildet sein, wobei in dem Flansch der Kurbelwelle eine Bohrung zum Durchgang gasförmigen Mediums in das antriebsseitige Übertragungselement des Torsionsschwingungsdämpfers und damit in das Gasfedersystem vorgesehen ist. Zur Weiterleitung des diesen Durchgang passierenden gasförmigen Mediums in das Gasfedersystem kann eine dem antriebsseitigen Übertragungselement zugeordnete Zuleitung dienen.

Bei einer Zuordnung des ortsfesten Druckkreises zum Abtrieb sind mindestens zwei Drehdurchführungen notwendig, und zwar eine erste zwischen dem Druckkreis und dem Abtrieb, und eine zweite zwischen dem letztgenannten und dem antriebsseitigen Übertragungselement, das bewegungsmäßig dem Antrieb zugeordnet ist. Dennoch kann diese Ausführung gegenüber der Zuordnung des ortsfesten Druckkreises zum Antrieb, die, wie zuvor erläutert, nur eine Drehdurchführung erfordert, notwendig sein, wenn am Rotationsteil des Abtriebs, konkret also an der Kurbelwelle, keine Maßnahme und/oder kein Bauraum vorgesehen ist, um die Drehdurchführung zu realisieren.

Die erste Drehdurchführung kann, um die Relativdrehbewegung des Abtriebs gegenüber dem stationären Druckkreis zu überbrücken, an der Abtriebsseite eines zum Wechsel des Übersetzungsverhältnisses dienenden Schaltgetriebe vorgesehen sein, sofern der Abtrieb das Schaltgetriebe axial vollständig durchdringt. Alternativ kann diese Drehdurchführung in der Kupplungsglocke und damit an der Antriebsseite des Schaltgetriebes vorgesehen sein.

Die zweite Drehdurchführung ist mit Vorzug durch das antriebsseitige Übertragungselement zentriert, um ihrerseits mittels integrierter Lager- und/oder Dichtelemente gegenüber dem Abtrieb als ein denselben gegenüber dem Antrieb zentrierendes Pilotlager wirksam zu sein. Von Vorteil ist die Ausbildung dieser Lager- und/oder Dichtelemente gleichzeitig als Dichtelemente, um Undichtigkeiten zu vermeiden.

Der mit dem Gasfedersystem in Druckverbindung stehende Druckkreis verfügt mit Vorzug über einen Versorgungsspeicher, der von einer Pumpe mit gasförmigem Medium in vorbestimmter Dichte befüllbar ist. Aufgrund dieses Versorgungsspeichers besteht die Möglichkeit, sehr kurzfristig eine Druckerhöhung im Speicherraum und/oder, falls zwischen dem Speicherraum und dem Versorgungsspeicher ein Zusatzspeicherraum vorliegt, auch des letztgenannten zu bewirken, wobei diese Druckerhöhung bei Zuordnung eines Stellgliedes, wie eines Ventils, zu dem Versorgungsspeicher, beeinflussbar ist. Hierfür ist allerdings ein Ventil zweckmäßig, dessen Durchflussweite durch die Regelung des Druckkreises beeinflussbar ist.

Der Druckkreis kann als geschlossenes oder als offenes Versorgungssystem ausgebildet sein. Bei einem geschlossenen Versorgungssystem erfolgt ein Druckabbau im Speicherraum und/oder, falls zwischen dem Speicherraum und dem Versorgungsspeicher ein Zusatzspeicherraum vorliegt, auch desselben in einen Expansionsspeicher, bei einem offenen Versorgungssystem dagegen aus dem Druckkreis heraus in die nachfolgend kurz als "Umgebung" bezeichnete Atmosphäre. In beiden Fällen ist zwischen dem Speicher- und/oder Zusatzspeicherraum und dem Expansionsspeicher oder der Umgebung ein Stellglied, wie ein Ventil, vorgesehen, wobei auch hier ein Ventil zweckmäßig ist, dessen Durchflussweite durch die Regelung des Druckkreises beeinflussbar ist.

Ein weiteres derartiges Stellglied ist bei einem geschlossenen Versorgungssystem vorhanden, und zwar zur Einstellung des Volumenstroms gasförmigen Mediums zwischen dem Expansionsspeicher und dem Versorgungsspeicher, wobei die Verdichtung des den Expansionsspeicher verlassenden Mediums vor Einspeisung in den Versorgungsspeicher durch die zwischengeschaltete Pumpe erfolgt, die lediglich einen Leckageverluste ausgleichenden Anteil gasförmigen Mediums aus der Umgebung ansaugt. Im Gegensatz dazu ist bei einem offenen Versorgungssystem das letztgenannte Stellglied entbehrlich, da das gesamte dem Versorgungsspeicher zugeleitete gasförmige Medium aus der Umgebung angesaugt und durch die Pumpe verdichtet wird.

Der Vorteil des geschlossenen Versorgungssystems liegt in einem geringeren Energieverbrauch, der des offenen Versorgungssystems dagegen in der Einsparung des Expansionsspeichers.

Das Gasfedersystem, das über Gasfedern verfügt, wird vorteilhafterweise in Kombination mit einem Zusatzfedersystem eingesetzt, in welchem vorzugsweise Stahlfedern Verwendung finden. Das Gasfedersystem kann, ebenso wie das Zusatzfedersystem, mit dem antriebsseitigen Übertragungselement und/oder dem abtriebsseitigen Übertragungselement in Wirkverbindung stehen, und zwar mit Vorzug in Reihenschaltung zueinander, wobei das Gasfedersystem vorteilhafterweise mittels eines Zwischenübertragungselementes mit dem Zusatzfedersystem in Wirkverbindung steht.

Mit Vorzug wird das Gasfedersystem zur Übertragung höherer Drehmomente als das Zusatzfedersystem bestimmt. Das Gasfedersystem kann hierbei mit axialem Versatz gegenüber dem Zusatzfedersystem angeordnet sein. Bei Anordnung des Gasfedersystems wirkungsmäßig zwischen dem antriebsseitigen Übertragungselement und dem Zwischenübertragungselement erfolgt bis zum Erreichen einer vorbestimmten Drehmomentenhöhe des vom Antrieb gelieferten Drehmomentes dessen Übertragung über das abtriebsseitig vorgesehene Zusatzfedersystem, wobei das Gasfedersystem zumindest im wesentlichen unverformt bleibt. In diesem Betriebszustand wird das Massenträgheitsmoment des antriebsseitigen Übertragungselementes durch das Gasfedersystem erhöht. Wächst das Drehmoment- des Antriebs über diese vorbestimmte Drehmomentenhöhe hinaus an, wird das Zusatzfedersystem, das dann seinen Federweg verbraucht hat, gemeinsam mit dem abtriebsseitigen Übertragungselement rotieren und hierbei dessen Massenträgheitsmoment erhöhen. Dies führt, wegen der Beruhigung des Abtriebs, zu einer besseren Entkopplung. Eine Übertragung des Drehmomentes erfolgt dann ausschließlich über das Gasfedersystem.

Im Gegensatz dazu führt bei Anordnung des Gasfedersystems wirkungsmäßig zwischen dem Zwischenübertragungselement und dem abtriebsseitigen Übertragungselement zur Erhöhung des Massenträgheitsmomentes ab der vorbestimmten Drehmomentenhöhe am antriebsseitigen Übertragungselement, was bei hohem antriebsseitigem Drehmoment und damit hoher Ungleichförmigkeit am Antrieb eine Beruhigung des Antriebs bewirkt.

Das Gasfedersystem kann zumindest im wesentlichen mit Radialversatz gegenüber dem Zusatzfedersystem angeordnet sein. Von besonderem Vorteil ist hierbei allerdings die Anordnung des Gasfedersystems im wesentlichen radial außerhalb des Zusatzfedersystems. Hierdurch ergibt sich der Vorteil, dass das zur Übertragung der höheren Drehmomente dienende Gasfedersystem gegenüber dem Zusatzfedersystem auf einem größeren Durchmesser angeordnet ist.

Mit Vorzug ist dem jeweiligen Zylinderraum eines Gasfedersystems eine dessen Kolben, insbesondere hierbei dessen Kolbenstempel, -überbrückende Drosselverbindung zugeordnet, die bezüglich ihrer Drosselwirkung mittels eines Stellelementes beeinflusst werden kann, wobei das letztgenannte entsprechend Vorgaben der Regelung einstellbar ist. Diese Drosselverbindung verläuft im wesentlichen zwischen zwei jeweils mit gasförmigem Medium befüllten Kammern des Zylinderraumes, wobei es sich vorzugsweise um einen Kolbenstangenraum auf einer Seite des Kolbenstempels als erste Kammer handelt, und um den Speicherraum auf der Gegenseite des Kolbenstempels. Solange kleine Lastschwankungen vorliegen, kann die Drosselverbindung mit Vorzug geschlossen bleiben, so dass kein Druckausgleich zwischen den beiden Kammern des Zylinderraumes stattfindet. Im Gegensatz dazu ermöglicht eine zumindest teilweise Öffnung der Drosselverbindung bei größeren Lastschwankungen einen Übertritt gasförmigen Mediums vom Speicherraum in den Kolbenstangenraum, um dadurch Energie zu dissipieren und die kompromißbehaftet an die im Betrieb auftretenden unterschiedlichen Lastzustände anpassbar sind.

Um diesem Problem bei den Stahlfedern entgegen zu wirken, zeigt die DE 41 28 868 A1 die Möglichkeit auf, bei einer Mehrzahl von in Umfangsrichtung hintereinander angeordneten Stahlfedern die einzelnen Stahlfedern mit unterschiedlichen Kennlinien abzustimmen, so dass bei Einleitung kleiner Drehmomente lediglich die Stahlfedern niedrigeren Kennlinien komprimiert werden, und erst mit zunehmendem Drehmoment auch die Stahlfedern mit höheren Kennlinien bezüglich ihrer Kompression folgen. Problematisch gestaltet sich hierbei allerdings die Drehzahlabhängigkeit der Stahlfedern, da deren Windungen mit zunehmender Fliehkraft nach radial außen gepresst werden, und sich dort verhaken. Torsionsschwingungen führen dadurch nicht zwingend zur Kompression der in Einleitungsrichtung der Torsionsschwingung benachbarten Stahlfeder, so dass die Dämpfungseinrichtung zunächst überhaupt keine Dämpfungswirkung erbringt. Erst höhere Lastzustände vermögen schließlich ein Lösen der Stahlfeder von ihrer radial äußeren Anlage zu bewirken, was als komfortmindernder Ruck im Fahrzeug empfunden wird, um allerdings bei der in Umfangsrichtung benachbarten Stahlfeder, die mit einer höheren Kennlinie ausgebildet sein kann, zunächst wieder aufzulaufen, bis auch diese Stahlfeder bei nochmals höherem Lastzustand von ihrer radial äußeren Anlage losgerissen wird. Im Gesamtergebnis steht demnach bei einer derartigen Betriebsweise nie das gesamte Federvolumen zur Verfügung, sondern stets nur ein Teil hiervon. Dieses Problem lässt sich durch die bei der DE 41 28 868 A1 vorgesehenen Schiebeelemente zwischen den Stahlfedern und deren radial äußerer Anlage zwar günstig beeinflussen, aber nicht vermeiden. Insofern ergibt sich bei derartigen Torsionsschwingungsdämpfern einerseits eine unzureichende Entkoppelungsgüte, und andererseits aufgrund hoher Steifigkeiten in der Dämpfungseinrichtung eine Eigenfrequenz in einem beim Fahren vergleichsweise häufig genutzten Drehzahlbereich. Besonders kritisch ist hierbei der untere Drehzahlbereich zwischen im wesentlichen 1000 und 2000 Umdrehungen/Minute bei gleichzeitig hohem Motormoment und entsprechend hohen Anregungen von Torsionsschwingungen, wodurch im Fahrzeug Brummgeräusche entstehen.

Auch die US 3,837,181A offenbart eine Ausgleichskupplung mit einer treibenden Welle, einer getriebenen Welle und einem Gehäuse, wobei die getriebene Welle zu der treibenden Welle gedämpft wird, wobei das die Dämpfung bewirkende Strömungsmittel ein zusammendrückbares Strömungsmittel, insbesondere Luft ist.

Der Erfindung liegt die Aufgabe zugrunde, die Dämpfungseinrichtung eines Torsionsschwingungsdämpfers derart auszubilden, dass unerwünschte Brummgeräusche auch unter Extrembedingungen vermeidbar sind.

Diese Aufgabe wird gemäß dem Anspruch 1 gelöst. Durch Anschluss des Speicherraums des Gasfedersystems an einen Druckkreis entsteht hierbei ein "aktives" Gasfedersystem, welches anspruchsgemäß die Möglichkeit bietet, bei einer Änderung des von dem Gasfedersystem zu übertragenden Drehmomentes mittels einer Neueinstellung des im Speicherraum anliegenden Druckes zumindest im Wesentlichen eine Anpassung der Kennlinie des Gasfedersystems an das geänderte Drehmoment auszulösen. In Fachkreisen wird hierbei zwischen "vollaktiven" und "teilaktiven" Gasfedersystemen unterschieden, wobei im Fall vollaktiver Gasfedersysteme bei jeglicher Änderung des willkürlich möglicher Gestaltung an beliebigen Stellen eines Fahrzeuges, hauptsächlich hierbei außerhalb des Torsionsschwingungsdämpfers, anordnen, so dass eine vorzügliche Bauraumnutzung gewährleistet ist.

Preiswert und technisch unproblematisch wird das Gasfedersystem insbesondere dann, wenn bereits im Fahrzeug vorhandene Technologie genutzt werden kann. Beispielhaft sei hierbei auf einen Kompressor verwiesen, der als Pumpe für den Druckkreis genutzt werden kann, ansonsten aber bereits wegen der Klimaanlage des Fahrzeuges und/oder wegen eines mit variabel einstellbarer Dämpfung ausgebildeten Fahrwerkes vorhanden ist.

Die Erfindung ist anhand von in der Zeichnung dargestellter Ausführungsbeispiele beschrieben. Es zeigt:
- Figur 1:: Einen Torsionsschwingungsdämpfer mit einem Gasfedersystem, versorgt über zwei Druckübertragungsstellen und kombiniert mit einem axial benachbarten Zusatzfedersystem;
- Figur 2:: eine Schnittdarstellung gemäß der Schnittlinie II - II in Fig. 1;
- Figur 3:: einen als geschlossenes Versorgungssystem schematisch dargestellten Druckkreis zur Versorgung des Gasfedersystems;
- Figur 4:: eine schematische Darstellung des Gasfedersystems, versehen mit einer Drosselverbindung;
- Figur 5:: ein Gasfedersystem gemäß Fig. 1, aber mit poligonalem Querschnitt;
- Figur 6:: wie Fig. 5, aber mit elliptischem Querschnitt;
- Figur 7:: wie Fig. 1, aber mit lediglich einer Druckübertragungsstelle zwischen dem Druckkreis und dem Gasfedersystem und mit
- -: Anordnung des letztgenannten mit Radialversatz gegenüber dem Zusatzfedersystem;
- Figur 8:: wie Fig. 3, aber mit Ausbildung des Druckkreises als offenes Versorgungssystem;
- Figur 9:: ein Kennliniendiagramm des Gasfedersystems;
- Figur 10:: ein Kennliniendiagramm des Gasfedersystems in Verbindung mit einer Kennlinie des Zusatzfedersystems.

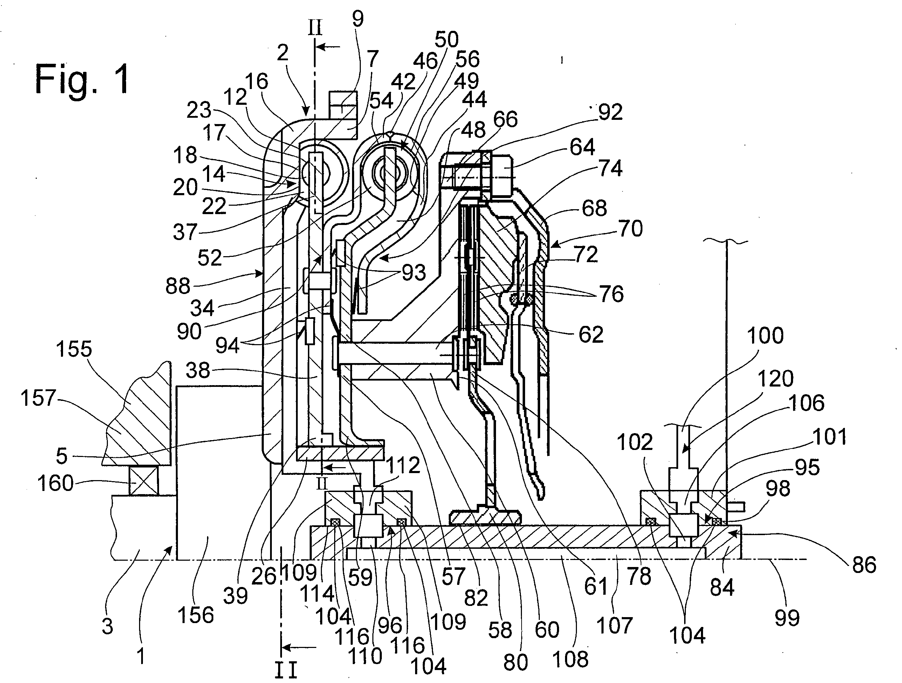

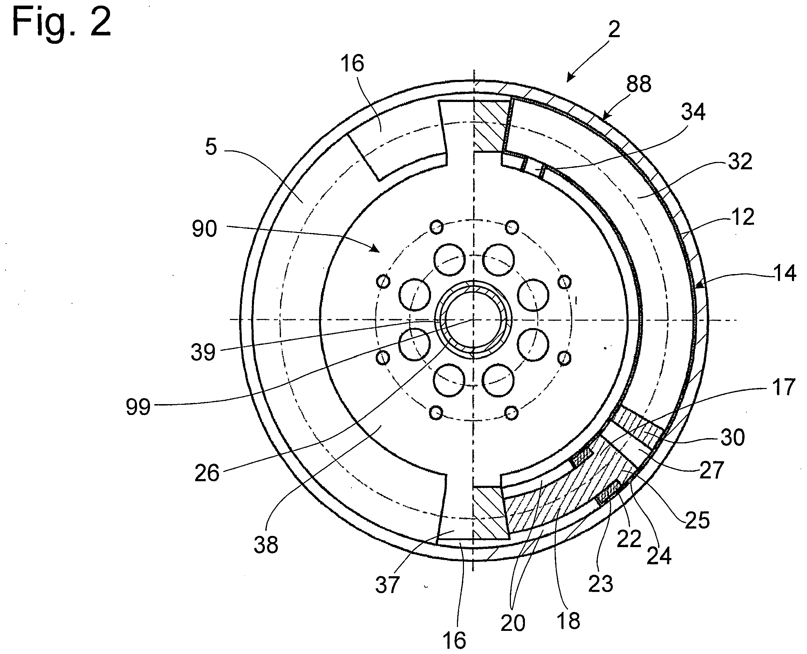

Die Fig. 1 und 2 zeigen einen Torsionsschwingungsdämpfer 2, der, wie aus Fig. 1 hervorgeht, an einen Antrieb 1 drehfest angebunden sein soll. Der Antrieb 1 ist mit Vorzug als Brennkraftmaschine ausgebildet, bei welcher ein Gehäuse 157 als Stationärteil 155 des Antriebs 1 und eine Kurbelwelle 3 als Rotationsteil 156 des Antriebs 1 dient. Fig. 1 zeigt weiterhin schematisch eine Lagerung 160, durch welche der Rotationsteil 156 im Wesentlichen reibungsfrei gegenüber dem Stationärteil 155 zentriert ist, wobei die Lagerung 160 das dem Torsionsschwingungsdämpfer 2 axial am nächsten kommende Lagerelement einer Mehrzahl nicht gezeigter Lagerelemente des Antriebes 1 darstellen soll.

Zur drehfesten Anbindung des Torsionsschwingungsdämpfers 2 an die Kurbelwelle 3 verfügt der Torsionsschwingungsdämpfer 2 über einen der Kurbelwelle 3 benachbarten Radialflansch 5, der im.radial äußersten Bereich in einen einen Zahnkranz 9 tragenden Axialansatz 7 übergeht.

Während der radial innere Bereich des Radialflansches 5 in nicht gezeigter Weise zur Anbindung des Torsionsschwingungsdämpfers 2 an die Kurbelwelle 3 dient, ist der radial äußere Bereich des Radialflansches 5 zur Aufnahme eines Gasfedersystems 14 vorgesehen, das nachfolgend mit Hinweis auf Fig. 2 ausführlich erläutert wird. Der Radialflansch 5 steht über ein angeformtes antriebsseitiges primäres Ansteuerelement 16 mit einem Zylinderraum 12 des Gasfedersystems 14 in Wirkverbindung. In Fig. 2 ist, der besseren Erkennbarkeit wegen, lediglich in einer Bildhälfte ein Gasfedersystem 14 dargestellt, während die andere Bildhälfte den Radialflansch 5 sowie das antriebsseitige primäre Ansteuerelement 16 zeigt. Selbstverständlich soll auch in der letztgenannten Bildhälfte ein Gasfedersystem 14 eingesetzt sein.

Wie Fig. 2 deutlicher zeigt, nimmt das Gasfedersystem 14 in seinem Zylinderraum 12 einen Kolben 17 mit einer Kolbenstange 18 auf, die sich in einen Kolbenstangenraum 20 erstreckt. Der Kolben 17 verfügt weiterhin über einen Kolbenstempel 25, der mit seinem Kolbenstempelrand 24 bezüglich seiner Geometrie an die Querschnittsform des Zylinderraums 12 zumindest im Wesentlichen angepasst ist, wobei die Ausführung nach Fig. 1 oder 2 von einer im Wesentlichen kreisförmigen Querschnittsgestaltung von Kolbenstempel 25 und Zylinderraum 12 ausgeht.

Der Kolben 17 durchgreift mit seiner Kolbenstange 18 in Umfangsrichtung eine Ausnehmung 23 einer Dichtung 22, die an der Kolbenstangenseite des-Kolbenstempels 25 vorgesehen ist. Die umfangsgemäße Gegenseite des Kolbenstempels 25 begrenzt einen im Zylinderraum 12 vorgesehenen Druckraum 27, dessen umfangsgemäße andere Begrenzung durch einen Trennkolben 30 gebildet wird, der seinerseits mit seiner vom Druckraum 27 abgewandten Seite einen Speicherraum 32 des Zylinderraums 12 begrenzt. In diesen Speicherraum 32 mündet, und zwar mit Vorzug in erheblichen umfangsgemäßen Abstand zum Trennkolben 30, eine Zuleitung 34, die, wie Fig. 1 zeigt, am Radialflansch 5 befestigt ist und über eine Aussparung 35 in einer dem Radialflansch 5 zugeordneten und denselben nach radial innen begrenzenden Radialflanschnabe 26 den im Wesentlichen ringförmigen Erstreckungsbereich des Torsionsschwingungsdämpfers 2 nach radial innen verlässt.

Fig. 1 und 2 zeigen gleichermaßen, dass die Kolbenstange 18 des Kolbens 17 in Wirkverbindung steht mit einem abtriebsseitigen primären Ansteuerelement 37 in Form einer Zwischenscheibe 38, die mittels eines Zwischenscheibenfußes 39 auf der bereits erwähnten Radialflanschnabe 36 angeordnet ist. Diese Zwischenscheibe 38 trägt drehfest ein erstes Deckblech 42, das gemeinsam mit einem über eine Schweißnaht 46 verbundenen zweiten Deckblech 44 einen Aufnahmeraum 48 für ein Zusatzfedersystem 50 bildet, das bei dem vorliegenden Ausführungsbeispiel mit Stahlfedern 52 versehen ist, die mittels am Aufnahmeraum 48 vorgesehener antriebsseitiger sekundärer Ansteuerelemente 49 ansteuerbar sind. Das Zusatzfedersystem 50 vermag sich über Gleitführungen 54 radial außen an einer am Aufnahmeraum 48 vorgesehenen Führungsbahn 56 abzustützen und beaufschlagt mit seinen von den antriebsseitigen sekundären Ansteuerelementen 49 abgewandten Umfangsseite eine Nabenscheibe 57, die demnach als abtriebsseitiges sekundäres Ansteuerelement 58 wirksam und mittels eines Nabenscheibenfußes 59 auf der Radialflanschnabe 26 angeordnet ist. Diese Nabenscheibe 57 trägt ihrerseits drehfest eine Ringmasse 60, bei welcher Axialdurchlässe 61 zur Aufnahme einer die Verbindung zur Nabenscheibe 57 herstellenden Vernietung 62 vorgesehen sind. Andererseits verfügt die Ringmasse 60 im radial äußeren Bereich über Gewindebohrungen 66, in welche zur Befestigungen eines Kupplungsgehäuses 68 einer Reibungskupplung 70 an der Ringmasse 60 Verschraubungen 64 jeweils einführbar sind. In an sich bekannter Weise ist die Reibungskupplung 70 mit einer Membranfeder 72 ausgebildet, deren Ansteuerung zum Ein- oder Ausrücken mittels eines nicht gezeigten Ausrückers über ihre nach radial innen greifenden Federzungen 73 erfolgt.

Bei in Richtung zur Ringmasse 60 erzeugter Axialkraft der Membranfeder an deren radial äußerem Ringbereich 75 wird eine Anpressplatte 74 in Richtung zur Ringmasse 60 beaufschlagt, so dass axial zwischen Ringmasse 60 und Anpressplatte 74 vorgesehene Reibbeläge 76 einer Kupplungsscheibe 78 kraftschlüssig zur Übertragung eines Drehmomentes eingespannt sind. Damit ist die Reibungskupplung 70 eingerückt. Die Kupplungsscheibe 78 verfügt im radial inneren Bereich über eine Nabe 80, die über eine Verzahnung 82 axial verlagerbar, aber drehfest an einer Getriebeeingangswelle 84 angreift, die entweder den Abtrieb 86 bildet oder als Bauteil demselben zugeordnet ist.

Im Wesentlichen wird durch den Radialflansch 5 inclusive der Zuleitung 34 und dem Gasfedersystem 14 ein antriebsseitiges Übertragungselement 88 des Torsionsschwingungsdämpfers 2 gebildet, durch die Zwischenscheibe 38 und den Aufnahmeraum 48 ein Zwischenübertragungselement 90 des Torsionsschwingungsdämpfers 2 und durch die Nabenscheibe 57 gemeinsam mit der Ringmasse 60 und der Reibungskupplung 70 ein abtriebsseitiges Übertragungselement 92 des Torsionsschwingungsdämpfers 2.

Hingewiesen werden soll außerdem auf im Aufnahmeraum 48 radial innerhalb des Zusatzfedersystems 50 vorgesehene Axialdichtmittel 93, die dann benötigt werden, wenn der Aufnahmeraum 48 zumindest teilweise mit viskosem Medium für Schmierung und geschwindigkeitsproportionale Dämpfung des Zusatzfedersystems befüllt ist. Des weiteren sind, zwischen antriebsseitigem Übertragungselement 88 und Zwischenübertragungselement 90 zum einen, sowie zwischen dem Zwischenübertragungselement 90 und dem abtrieb sseitigen Übertragungselement 92 zum anderen, jeweils Axialdistanzmittel 94 vorgesehen, die für eine zwar elastische, aber dennoch vorbestimmte Relativposition der einzelnen Übertragungselemente 88, 90, 92 in Achsrichtung zueinander sorgen sollen.

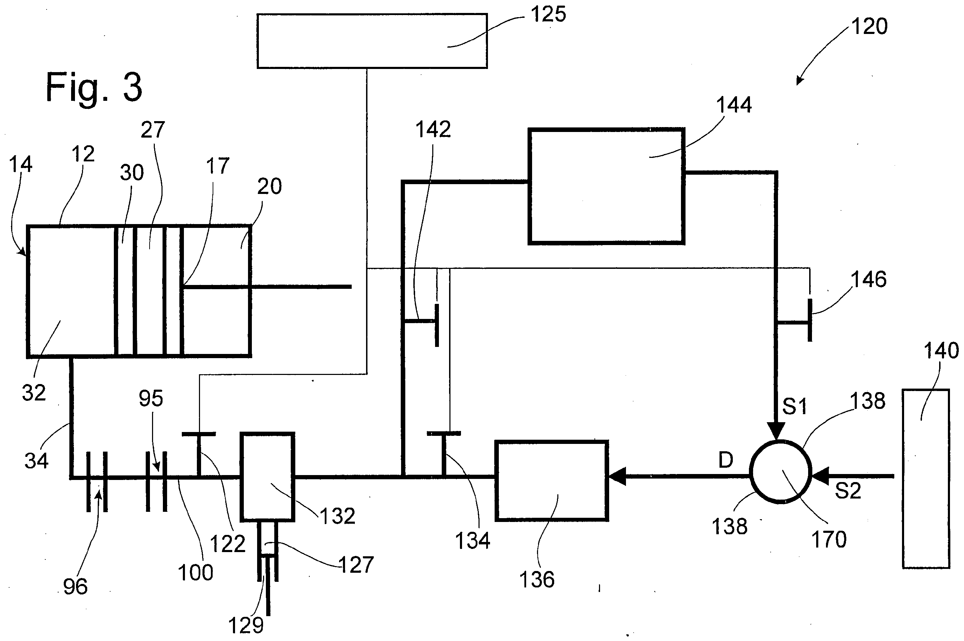

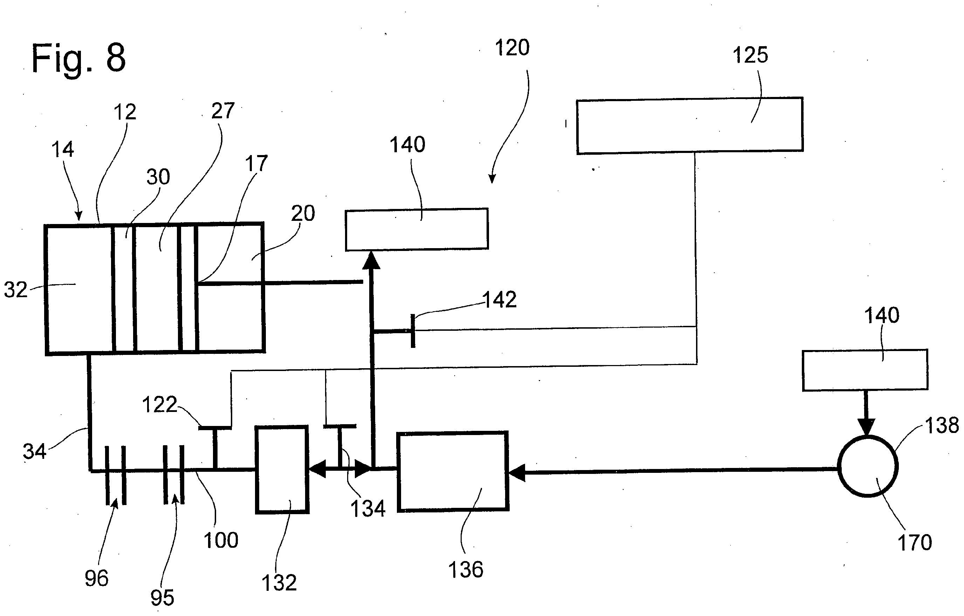

Der Torsionsschwingungsdämpfer 2 wirkt mit einem in Fig. 1 mittels einer Druckverbindung 100 lediglich schematisch dargestellten Druckkreis 120 zusammen. Nähere Informationen zur Ausgestaltung des Druckkreises 120 werden nachfolgend anhand der Fig. 3 oder 8 gegeben. Aus Fig. 1 ist allerdings erkennbar, dass die Zuleitung 100 des Druckkreises 120 über eine erste Druckübertragungsstelle 95 mit der Getriebeeingangswelle 84 und daher mit dem Abtrieb 86 in Wirkverbindung steht, und dass der Abtrieb 86 in Form der Getriebeeingangswelle 84 wiederum mittels einer zweiten Druckübertragungsstelle 96 sich in Wirkverbindung mit der Zuleitung 32 befindet. Beide Druckübertragungsstellen 95, 96 sind ebenso wie der Antrieb 1 und der Abtrieb 86 jeweils gegenüber einer Drehachse 99 ausgerichtet.

Beginnend mit der ersten Druckübertragungsstelle 95 weist diese ein erstes Druckkreis-Bauteil 101 auf, das sich mit einem Radialdurchgang 106 an die Zuleitung 100 anschließt und ebenso wie diese zumindest im Wesentlichen ortsfest ist. Relativ drehbewegbar gegenüber diesem ersten Druckkreis-Bauteil 101 ist die Getriebeeingangswelle 84, die wiederum mit einem ersten Radialabschnitt 102 eine Druckverbindung mit dem ersten Druckkreis-Bauteil 101 findet. Um einen Verlust gasförmigen Mediums, wie beispielsweise Druckluft, beim Übergang zwischen dem ersten Druckkreis-Bauteil 101 und der Getriebeeingangswelle 84 zu vermeiden, sind axial beidseits des Radialdurchganges 106 Lage- und/oder Dichtmittel 104 vorgesehen, und zwar an der der Getriebeeingangswelle 84 zugewandten Radialseite des ersten Druckkreis-Bauteiles 101. Insofern dient die Getriebeeingangswelle 84 ebenfalls als Druckkreis-Bauteil.

Der Radialabschnitt 102 der Getriebeeingangswelle 84 steht in Druckverbindung mit einer in der Getriebeeingangswelle 84 vorgesehenen, sich im Wesentlichen in Achsrichtung erstreckenden Zentralausnehmung 108 in Form einer integrierten Druckleitung 107, die im Bereich des antriebsseitigen Endes der Getriebeeingangswelle 84 in einen weiteren Radialabschnitt 110 der Getriebeeingangswelle 84 übergeht. Dieser Radialabschnitt 110 steht in Druckverbindung mit einen Radialdurchgang 112 in einem zweiten Druckkreis-Bauteil 109, das, der zweiten Druckübertragungsstelle 96 zugehörend, wiederum durch axial beidseits von Radialabschnitt 110 und Radialdurchgang 112 vorgesehenen Lager- und/oder Dichtmitteln 104 ausgebildet ist, und zwar an der der Getriebeeingangswelle 84 zugewandten Radialseite des zweiten Druckkreis-Bauteiles 109. Zugunsten einer problemlosen Druckübertragung zwischen dem Radialdurchgang 112 des zweiten Druckkreis-Bauteiles 109 und der Zuleitung 34 ist das zweite Druckkreis-Bauteil 109 zumindest im Wesentlichen bewegungsgleich mit der Zuleitung 34 und damit mit dem antriebsseitigen Übertragungselement 88, so dass auch zwischen dem zweiten Druckkreis-Bauteil 109 und der Getriebeeingangswelle 84 von einer Relativbewegung ausgegangen werden muss. Bei der dargestellten Ausführung entsteht zudem der Nutzen einer Zentrierung der Getriebeeingangswelle 84 durch das zweite Druckkreis-Bauteil 109 in Verbindung mit der Zuleitung 34 und der Radialflanschnabe 26, wobei speziell die Lager- und/oder Dichtmittel 104 im Druckkreis-Bauteil 109 als Pilotlagerung 116 für die Getriebeeingangswelle 84 wirksam sind. Insgesamt gesehen, dient die erste Druckübertragungsstelle 95 als erste Drehdurchführung 98 und die zweite Druckübertragungsstelle 96 als zweite Drehdurchführung 114.

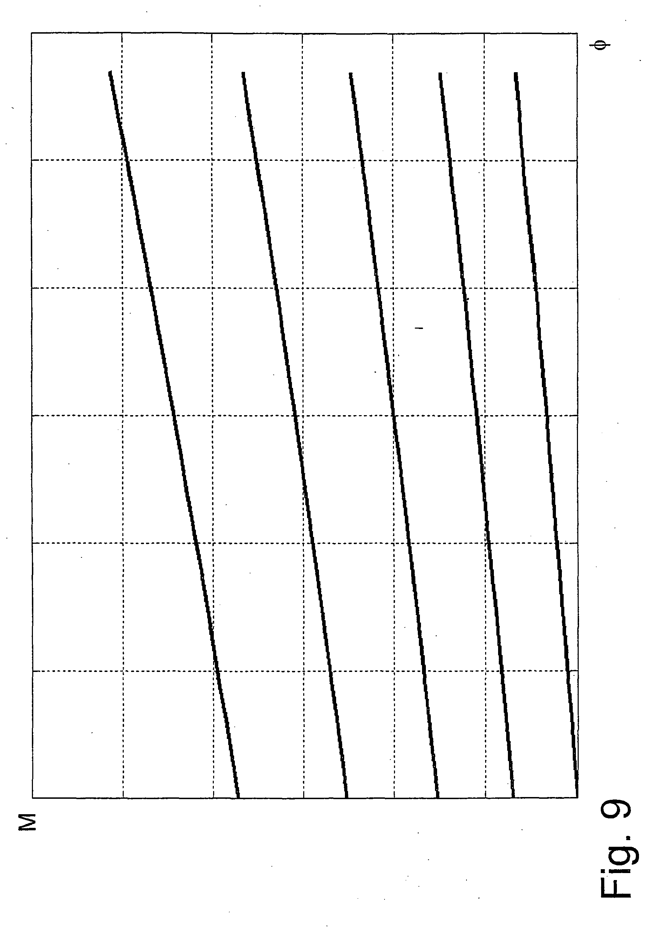

Über die Zuleitung 100 des Druckkreises 120 eingeleitetes gasförmiges Medium wird nach Passage der ersten Druckübertragungsstelle 95 in der Zentralausnehmung 108 der Getriebeeingangswelle 84 zur zweiten Druckübertragungsstelle 96 weitergeleitet, um von dieser über die Zuleitung 34 in das Gasfedersystem 14 zu gelangen. Je höher hierbei der Druck infolge des eingeleiteten gasförmigen Mediums im Speicherraum 32 des Gasfedersystems 14 ansteigt, umso mehr erhöht sich die Momentenübertragbarkeit dieses Gasfedersystems 14. Es wird also in Abhängigkeit von dem im Speicherraum 32 (Fig. 2) angelegten Druck eine Anpassung der in Fig. 9 dargestellten jeweiligen Kennlinie des Gasfedersystems 14 an die jeweilige Momentengröße des zu übertragenden Drehmomentes vorgenommen. Bedingt durch diese Anpassung ist jeweils die dem gerade vorliegenden Lastzustand optimal zugeordnete Kennlinie realisiert, so dass jeweils praktisch der gesamte Federweg, welchen das Gasfedersystem 14 bei dieser Kennlinie zu bieten vermag, für die Dämpfung eventueller lastwechselbedingter Torsionsschwingungen zur Verfügung steht. Selbstverständlich kann eine weitere Belastungszunahme durch noch höheren Druck im Speicherraum 32 und damit die Realisierung einer nochmals höheren Kennlinie ausgeglichen werden, eine Belastungsabnahme dagegen durch eine Druckabsenkung im Speicherraum 32, was zur Realisierung einer geringeren Kennlinie führt. Es bleibt zu ergänzen, dass die Fig. 9 die Kennlinien in Abhängigkeit vom jeweiligen Drehmoment M, bezogen auf den durch das Gasfedersystem 14 bereitgestellten Auslenkwinkel φ, darstellt. Der Übergang zwischen den einzelnen Kennlinien kann durch vorbestimmbar große Stufen oder aber zumindest im wesentlichen kontinuierlich erfolgen.

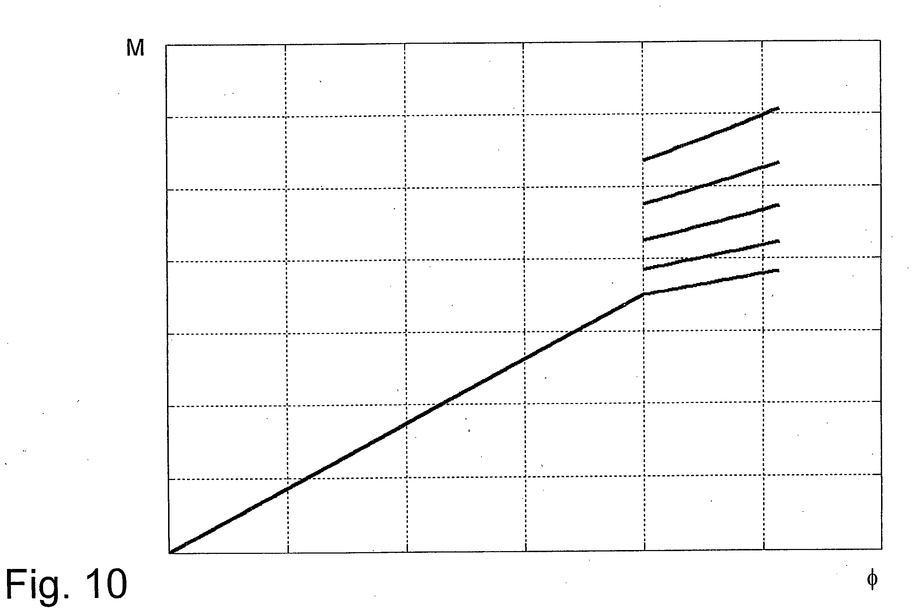

Die Gesamtkennlinie des Torsionsschwingungsdämpfers 2 ist in Fig. 10 dargestellt, und zwar ebenfalls bei Darstellung in Abhängigkeit vom jeweiligen Drehmoment M, bezogen auf den durch das Gasfedersystem 14 bereitgestellten Auslenkwinkel φ. Die Kennlinie in Fig. 10 geht von einer Abstimmung aus, nach welcher das Zusatzfedersystem 50 über nur eine Kennlinie verfügt, die, bis zum Erreichen eines vorbestimmten Drehmomentes des Antriebs, erkennbar in Fig. 10 durch den Grenzwinkel φG, für die Funktion der Torsionsschwingungsdämpfung sorgt, wobei bis zu diesem vorbestimmten Drehmoment das Gasfedersystem 14 zumindest im wesentlichen keine Verformung erfährt. Bei Überschreitung dieses vorbestimmten Drehmomentes hat das Zusatzfedersystem allerdings seinen gesamten verfügbaren Federweg aufgebraucht, so dass sich ab jetzt, beginnend mit dem Grenzwinkel φG, die zuvor anhand der Fig. 9 erläuterte Kennliniensituation des Gasfedersystems 14 auswirkt.

Im Gegensatz zum Speicherraum 32, in welchem sich gasförmiges Medium befindet, ist die Gegenseite des Trennkolbens 30, also der Druckraum 27, mit viskosem Medium befüllt, das nicht nur eine unverzügliche Weiterleitung einer Bewegung des Kolbens 17 an den Trennkolben 30 veranlasst, sondern darüber hinaus auch eine Schmierung des Kolbens 17 sowie der Dichtung 22, wodurch sich eine geringere reibungsbedingte Anhaftung des Kolbenstempelrandes 24 an der Innenwandung des Zylinderraumes 12 ergibt. Der die Kolbenstange 18 umschließende Kolbenstangenraum 20 schließlich kann entweder mit gasförmigem Medium befüllt sein, kann ebenso aber auch drucklos sein, was nachfolgend kurz mit dem Ausdruck "Umgebung" angesprochen ist. Wie die bereits erwähnten Fig. 3 und 8 zeigen, trägt dort die jeweilige Umgebung die Bezugsziffer 140.

Beginnend mit dem Druckkreis gemäß Fig. 3 grenzt an die antriebsseitige Druckübertragungsstelle 95 ein erstes Stellglied 122 an, das an eine Steuerungs- und/oder Regelungsvorrichtung 125 angeschlossen und daher bezüglich seiner Einstellung beeinflussbar ist, wobei nachfolgend die Steuerungs- und/oder Regelungsvorrichtung 125 kurz als Regelung 125 bezeichnet ist. Mittels des ersten Stellgliedes 122 ist die Druckverbindung zu einem Zusatzspeicherraum 132 einstellbar, der bei geöffnetem ersten Stellglied 122 eine Vergrößerung des Volumens des Speicherraums 32 des Gasfedersystems 14 ermöglicht, bei geschlossenem ersten Stellglied 122 dagegen eine Volumenbeeinflussung des Speicherraums 32 ausschließt. Da der Zusatzspeicherraum 132 ebenso wie die Zuleitung 100 ortsfest angeordnet ist, kann auch bei kritischen Bauraumverhältnissen für den Torsionsschwingungsdämpfer 2 der mit dessen antriebsseitigem Übertragungselement 88 bewegte Speicherraum 32 kompakt gehalten werden und stattdessen das entsprechende Volumen im Zusatzspeicherraum 132 ergänzt sein. Ein umso höheres Volumen für gasförmiges Medium im Speicherraum 32 sowie im Zusatzspeicherraum 132 wirkt sich funktional wie ein extrem großer Federweg an einem konventionellen Stahlfeder-Torsionsschwingungsdämpfer aus, wobei insbesondere durch den Zusatzspeicherraum 132 der Federweg nachteilsfrei vergrößert werden kann. Ergänzend hierzu kann durch den Schwingkompressor 127 eine schwingende Luftsäule erzeugt werden, die das zuvor bereits erwähnte reibungsbedingte Anhaften des Kolbens 17 über dessen Kolbenstempelrand 24 am Zylinderraum 12 noch weiter minimiert. Auch kann der Schwingkompressor 127 bei entsprechender Ansteuerung, beispielsweise mittels der Regelung 125, zumindest kurzfristig, aber sehr spontan, für eine Druckerhöhung oder für eine Druckabsenkung im Zusatzspeicherraum 132 und damit letztendlich auch im Speicherraum 32 herangezogen werden.

Der Zusatzspeicherraum 132 ist zum einen über ein zweites Stellglied 134 und einen Versorgungsspeicher 136, in welchem ein vorbestimmter Überdruck aufgebaut werden kann, an einen Druckausgang D einer Pumpe 138 angeschlossen. Des weiteren ist der Zusatzspeicherraum 132 über ein drittes Stellglied 142, einen Expansionsspeicher 144 und ein viertes Stellglied 146 mit einem ersten Saugeingang S1 der Pumpe verbunden. Die Stellglieder 134, 142 und 146 sind jeweils an die Regelung 125 angeschlossen und damit bezüglich ihrer jeweiligen Öffnungsweite einstellbar. Während das zweite Stellglied 134 das Befüllen des Zusatzspeicherraums 132 aus dem Versorgungsspeicher 136 mit gasförmigem Medium einstellbar gestaltet, kann über das dritte Stellglied 142 das Entleeren des Zusatzspeicherraumes 132 in den Expansionsspeicher 144 eingestellt werden. Durch Einstellung des vierten Stellgliedes 146 schließlich kann der Anteil gasförmigen Mediums, der über den Saugeingang S1 der Pumpe 138 zu deren Druckausgang D gelangt, gegenüber einem weiteren Anteil gasförmigen Mediums, das über einen zweiten Saugeingang S2 der Pumpe 138 aufgenommen wird, bestimmt werden. Beispielsweise können so eventuelle Verluste gasförmigen Mediums am ersten Saugeingang S1 der Pumpe 138 über deren zweiten Saugeingang S2 ersetzt werden, und zwar aus einer Umgebung 140, die bei Verwendung von Luft als gasförmiges Medium durch die normale Umgebungsatmosphäre gebildet werden kann, bei anderen gasförmigen Medien dagegen durch einen isolierten Speicherbehälter. Im Fall der Verwendung von Luft als gasförmiges Medium ist die Pumpe 138 als Druckluftquelle 170 wirksam.

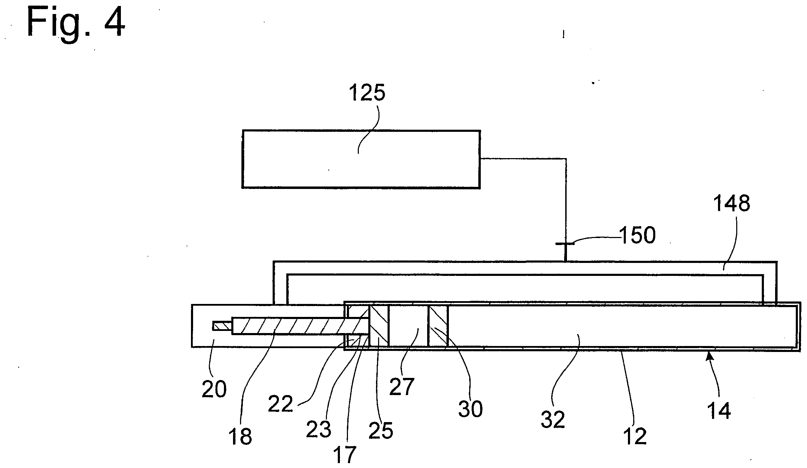

Während in Fig. 3 der Druckkreis 120 als geschlossenes Versorgungssystem ausgebildet ist, bei welchem nur die Verluste gasförmigen Mediums aus der Umgebung 140 ersetzt werden, handelt es sich bei dem Druckkreis 120 gemäß Fig. 8 um ein offenes Versorgungssystem, bei welchem das gesamte gasförmige Medium, welches den Zusatzspeicherraum 132 verlässt, an die Umgebung 140 abgegeben wird, und auch das gesamte gasförmige Medium, welches dem Zusatzspeicherraum 132 über den Versorgungsspeicher 136 zugeführt werden soll, durch die Pumpe 138 aus der Umgebung 140 entnommen wird. Fig. 4 zeigt eine besondere Ausgestaltung des Gasfedersystems 14, wobei zwischen dem Speicherraum 32 und dem Kolbenstangenraum 20 eine Drosselverbindung 148 besteht, die mittels eines an der Regelung 125 angeschlossenen Stellelementes 150 eingestellt werden kann. Zum einen kann auf diese Weise eine Dämpfungsfunktionalität erzielt werden, indem eine Gassäule des gasförmigen Mediums drosselbehaftet die Drosselverbindung 148 durchqueren muss, und zum anderen kann durch Aufbau eines Druckes auch im Kolbenstangenraum 20 erreicht werden, dass sich ein Gegenpuffer im Sinne einer dem Speicherraum 32 entgegenwirkenden Anschlagfeder aufbaut. Dies ist insbesondere bei schnellen Lastwechselschlägen von Vorteil, bei denen der Kolben aufgrund beidseitiger Dämpfung rasch in eine mittlere Position zurückkehren soll.

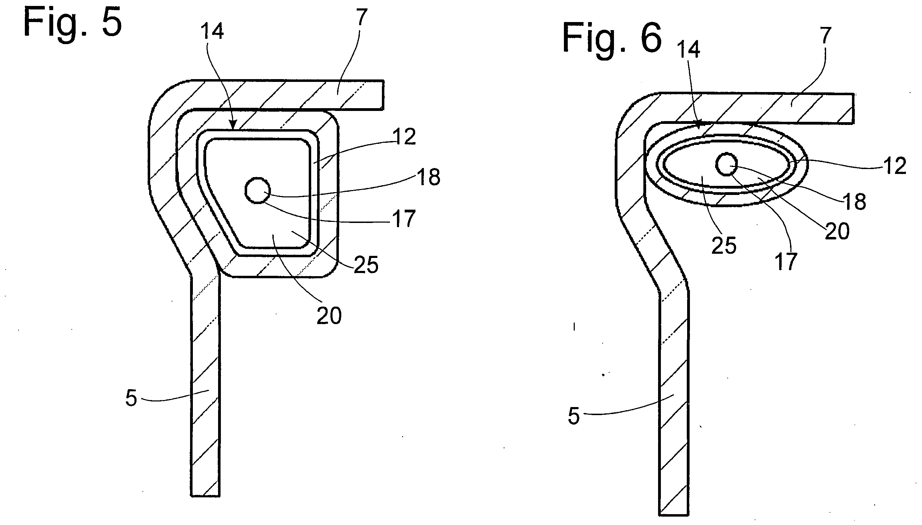

Die Fig. 5 und 6 entsprechen, was die Ausführung des Gasfedersystems 14 betrifft, im Wesentlichen der Ausführung nach Fig. 1, bieten allerdings andere geometrische Querschnittsformen. So zeigt Fig. 5 eine poligonale Ausführung des Kolbenstempels 25 sowie dessen Kolbenstempelrandes 24 am Kolben 17 und, in Anpassung hieran, eine ebenfalls poligonale Ausbildung des Zylinderraumes 12. In vergleichbarer Weise stellt Fig. 6 eine Ausführung mit elliptischer Geometrie dar. Derartige Geometrien ermöglichen eine optimale Anpassung des Gasfedersystems 14 an den dem Torsionsschwingungsdämpfer 2 gewährten Bauraum.

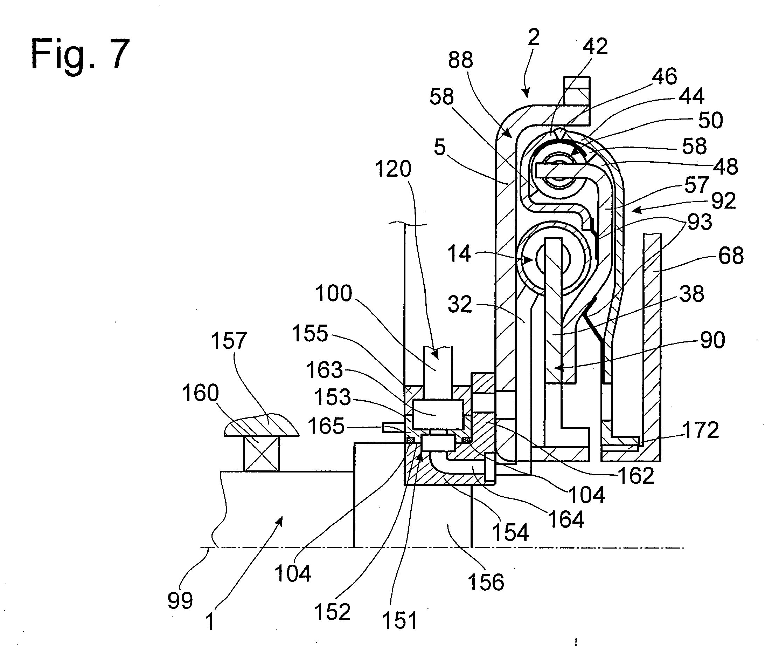

Fig. 7 zeigt im Wesentlichen eine von Fig. 1 abweichende Ausgestaltung einer Druckübertragungsstelle, der in Fig. 7 die Bezugsziffer 151 zugeordnet ist. Hierbei ist ein erstes Druckkreis-Bauteil 153 vorhanden, das zumindest im Wesentlichen drehfest gegenüber dem Stationärteil 155 des Antriebes 1, also gegenüber dem Gehäuse 157 ist, während ein zweites Druckkreis-Bauteil 154 der Druckübertragungsstelle 151 im Wesentlichen bewegungsgleich mit dem Rotationsteil 156 des Antriebs 1, also mit dessen Kurbelwelle 3 ist. An der Relativbewegungsstelle zwischen den beiden Druckkreis-Bauteilen 153, 154 sind Lager- und/oder Dichtmittel 104 vorgesehen, und zwar axial beidseits eines Radialdurchganges 163, der im ersten Druckkreisbauteil 153 enthalten ist, und auch axial beidseits des Radialeinganges einer Versorgungsumlenkung 164 im zweiten Druckkreisbauteil 154, wobei diese Versorgungsumlenkung 164 in die Zuleitung 34 des Gasfedersystems 14 mündet. Bei dieser konstruktiven Ausgestaltung verfügt das zweite Druckkreisbauteil 154 über einen nach radial außen greifenden Stützflansch 162, der zur Befestigung des Radialflansches 5 des antriebsseitigen Übertragungselementes 88 dient. Der Vorteil einer derartigen, antriebsseitig des Torsionsschwingungsdämpfers 2 vorgesehene Druckübertragungsstelle 151 liegt in der Begrenzung auf die einzelne Druckübertragungsstelle 151. Allerdings kann eine derartige Ausgestaltung nur bei entsprechender Ausführung der Brennkraftmaschine Verwendung finden, bei welcher die Kurbelwelle 3 gegenüber dem Gehäuse 157 der Brennkraftmaschine in Achsrichtung übersteht.

Weiterhin unterscheidet sich die Ausführung nach Fig. 7 von derjenigen nach Fig. 1 dadurch, dass bei Fig. 7 die von der Kolbenstange 18 des Kolbens 17 des Gasfedersystems 14 beaufschlagte Zwischenscheibe 38 gemeinsam mit der Nabenscheibe 57 das Zwischenübertragungselement 90 bildet, so dass nun die Nabenscheibe 57 als antriebsseitiges sekundäres Ansteuerelement 49 dient. Daher werden bei dieser konstruktiven Ausführung an den Deckblechen 42 und 44 die abtriebsseitigen sekundären Ansteuerelemente 58 für das Zusatzfedersystem 50 vorgesehen sein. Folgerichtig sind nun die Deckbleche 42, 44 gemeinsam mit einem Kupplungsgehäuse 68, das mit dem abtriebsseitigen Deckblech 44 mittels einer Verzahnung 172 in axial verlagerbarer, aber drehfester Verbindung steht, als das abtriebsseitige Übertragungselement 92 wirksam. Anders als bei Fig. 1 ist allerdings bei der in Fig. 7 gezeigten Ausführung das Kupplungsgehäuse 68 bevorzugter Teil einer nicht näher gezeigten Kupplungsvorrichtung, wie sie in Verbindung mit Lastschaltgetrieben zur Anwendung kommt. Eine derartige Kupplungsvorrichtung ist für sich bekannt, beispielsweise durch die DE 100 34 730 A1, und soll daher nicht näher erläutert werden.

Bei der in Fig. 7 gezeigten Konstruktion sind lediglich Axialdichtmittel 93 erforderlich, sofern im Aufnahmeraum 48 viskoses Medium enthalten ist. Da beide Axialdichtmittel 93jeweils in der gleichen Richtung, nämlich in Richtung zum Antrieb 1 hin wirken, sind Axialdistanzmittel 94, wie sie in Fig. 1 gezeigt sind, entbehrlich.

Beim Vergleich der Fig. 1 und 7 miteinander wird auch deutlich, dass in Abhängigkeit von den jeweils vorgegebenen Bauraumverhältnissen für den Torsionsschwingungsdämpfer 2 das Gasfedersystem 14 und das Zusatzfedersystem 50 mit axialem Versatz zueinander angeordnet sind, oder aber gemäß Fig. 7 mit radialem Versatz zueinander. Ebenso lassen sich selbstverständlich auch die Positionen des Gasfedersystems 14 und des Zusatzfedersystems 50 bezüglich des antriebsseitigen Übertragungselementes 88 und des abtriebsseitigen Übertragungselementes 92 beliebig vertauschen.

Bezüglich des Zusatzfedersystems 50 bleibt nachzutragen, dass dieses bei Ausbildung mit Stahlfedern 52 selbstverständlich über Gleitführungen 54 verfügen kann, wie sie in der eingangs genannten DE 41 28 868 A1 dargestellt und beschrieben sind.

### Bezugszeichenliste

- 1: Antrieb
- 2: Torsionsschwingungsdämpfer
- 3: Kurbelwelle
- 5: Radialflansch
- 7: Axialansatz
- 9: Zahnkranz
- 12: Zylinderraum
- 14: Gasfedersystem
- 16: antriebsseitiges primäres Ansteuerelement
- 17: Kolben
- 18: Kolbenstange
- 20: Kolbenstangenraum
- 22: Dichtung
- 23: Ausnehmung
- 24: Kolbenstempelrand
- 25: Kolbenstempel
- 26: Radialflansch
- 27: Druckraum
- 30: Trennkolben
- 32: Speicherraum
- 34: Zuleitung
- 35: Aussparung
- 37: abtriebsseitiges primäres Ansteuerelement
- 38: Zwischenscheibe
- 39: Zwischenscheibenfuß
- 42: erstes Deckblech
- 44: zweites Deckblech
- 46: Schweißnaht
- 48: Aufnahmeraum
- 49: antriebsseitiges sekundäres Ansteuerelement
- 50: Zusatzfedersystem
- 52: Stahlfeder
- 54: Gleitführung
- 56: Führungsbahn
- 57: Nabenscheibe
- 58: abtriebsseitiges sekundäres Ansteuerelement
- 59: Nabenscheibenfuß
- 60: Ringmasse
- 61: Axialdurchlass
- 62: Vernietung
- 64: Verschraubung
- 66: Gewindebohrung
- 68: Kupplungsgehäuse
- 70: Reibungskupplung
- 72: Membranfeder
- 73: Federzungen
- 74: Anpressplatte
- 75: Ringbereich
- 76: Reibbeläge
- 78: Kupplungsscheibe
- 80: Nabe
- 82: Verzahnung
- 84: Getriebeeingangswelle
- 86: Abtrieb
- 88: antriebsseitiges Übertragungselement
- 90: Zwischenübertragungselement
- 92: abtriebsseitiges Übertragungselement
- 93: Axialdichtmittel
- 94: Axialdistanzmittel
- 95: erste Druckübertragungsstelle
- 96: zweite Druckübertragungsstelle
- 98: erste Drehdurchführung
- 99: Drehachse
- 100: Zuleitung
- 101: erstes Druckkreis-Bauteil
- 102: Radialabschnitt
- 104: Lager- und/oder Dichtmittel
- 106: Radialdurchgang
- 107: integrierte Druckleitung
- 108: Zentralausnehmung
- 109: zweites Druckkreis-Bauteil
- 110: Radialabschnitt
- 112: Radialdurchgang
- 114: zweite Drehdurchführung
- 116: Pilotlagerung
- 120: Druckkreis
- 122: erstes Stellglied
- 125: Steuerungs- und/oder Regelungsvorrichtung
- 127: Schwingkompressor -
- 129: Hubkolbenkompressor
- 132: Zusatzspeicherraum
- 134: zweites Stellglied
- 136: Versorgungsspeicher
- 138: Pumpe
- 140: Umgebung
- 142: drittes Stellglied
- 144: Expansionsspeicher
- 146: viertes Stellglied
- 148: Drosselverbindung
- 150: Stellelement
- 151: Druckübertragungsstelle
- 152: Drehdurchführung
- 153: erstes Druckkreis-Bauteil
- 154: zweites Druckkreis-Bauteil
- 155: Stationärteil des Antriebs
- 156: Rotationsteil des Antriebs
- 157: Gehäuse
- 158: Lager- und/oder Dichtelemente
- 160: Lagerung
- 162: Stützflansch
- 163: Radialdurchgang
- 164: Versorgungsumlenkung
- 165: Druckkreis-Bauteil
- 167: Rollbalg
- 170: Druckluftquelle
- 172: Verzahnung

## Patentansprüche

1. Torsionsschwingungsdämpfer, aufweisend ein mit einem Antrieb verbundenes antriebsseitiges Übertragungselement, ein mit einem Abtrieb in Wirkverbindung bringbares, gegenüber dem antriebsseitigen Übertragungselement drehauslenkbares abtriebsseitiges Übertragungselement und eine zwischen den beiden Übertragungselementen vorgesehene Dämpfungseinrichtung mit mindestens einem Gasfedersystem, das zur Übertragung eines Drehmomentes zwischen dem antriebsseitigen und dem abtriebsseitigen Übertragungselement dient und über einen gasförmiges Medium enthaltenden Speicherraum verfügt, wobei der Speicherraum (32) des Gasfedersystems (14) an einen Druckkreis (120) angeschlossen ist, durch welchen wenigstens bei einer Änderung des von dem Gasfedersystem (14) zu übertragenden Drehmomentes mittels einer Neueinstellung des im Speicherraum (32) anliegenden Druckes zumindest im Wesentlichen eine Anpassung der Kennlinie des Gasfedersystems (14) an das geänderte Drehmoment auslösbar ist, **dadurch gekennzeichnet, dass** der Druckkreis (120) über einen mit dem Speicherraum (32) des Gasfedersystems (14) in Druckverbindung bringbaren Zusatzspeicherraum (132) verfügt, und, dass der Zusatzspeicherraum (132) mit einem Versorgungsspeicher (136) für gasförmiges Medium oder mit einem Expansionsspeicher (144) für gasförmiges Medium in Druckverbindung versetzbar ist.

2. Torsionsschwingungsdämpfer nach Anspruch 1,
**dadurch gekennzeichnet,**
**dass** der Druckkreis (120) wenigstens eine Druckübertragungsstelle (95, 96; 151) zwischen zwei relativ zueinander bewegbaren Druckkreis-Bauteilen (101,84; 109, 84; 153, 154) aufweist.

3. Torsionsschwingungsdämpfer nach Anspruch 2,
**dadurch gekennzeichnet,**
**dass** zumindest eine Zuleitung (100) des Druckkreises (120) über eine erste Druckübertragungsstelle (95) mit dem Abtrieb (86) und derselbe über eine zweite Druckübertragungsstelle (96) mit wenigstens einer in den Speicherraum (32) des Gasfedersystems (14) führenden Zuleitung (34) in Druckverbindung steht.

4. Torsionsschwingungsdämpfer nach Anspruch 2 oder 3,
**dadurch gekennzeichnet,**
**dass** ein Druckkreis-Bauteil (101) der ersten Druckübertragungsstelle (95) Teil einer mit dem Druckkreis (120) in Druckverbindung stehenden ersten Drehdurchführung (98) ist, der weiterhin der Abtrieb (86) oder ein demselben zugehöriges Bauteil (84) zugeordnet ist.

5. Torsionsschwingungsdämpfer nach Anspruch 3,
**dadurch gekennzeichnet,**
**dass** ein Druckkreis-Bauteil (109) der zweiten Druckübertragungsstelle (96) Teil einer mit dem Speicherraum (32) des Gasfedersystems (14) in Druckverbindung stehenden zweiten Drehdurchführung (114) ist, der weiterhin der Abtrieb (86) oder ein demselben zugeordnetes Bauteil (84) zugeordnet ist.

6. Torsionsschwingungsdämpfer nach Anspruch 2,
**dadurch gekennzeichnet,**
**dass** ein erstes Druckkreis-Bauteil (153) einer einzelnen Druckübertragungsstelle (151) einem Stationärteil (155) des Antriebs (1) zugeordnet ist und mit dem Druckkreis (120) in Druckverbindung steht, während ein zweites Druckkreis-Bauteil (154) der einzelnen Druckübertragungsstelle (151) einem Rotationsteil (156) des Antriebs (1) zugeordnet ist und eine Strömungsverbindung mit dem Speicherraum (32) des Gasfedersystems (14) herstellt.

7. Torsionsschwingungsdämpfer nach Anspruch 6 mit einem durch eine Brennkraftmaschine gebildeten Antrieb, dessen Gehäuse als Stationärteil und dessen Kurbelwelle als Rotationsteil wirksam ist,
**dadurch gekennzeichnet,**
**dass** das Gehäuse (157) mit dem Druckkreis (120) und die Kurbelwelle (3) mit dem Speicherraum (32) des Gasfedersystems (14) in Druckverbindung steht.

8. Torsionsschwingungsdämpfer nach einem der Ansprüche 2 bis 7,
**dadurch gekennzeichnet,**
**dass** die wenigstens eine Druckübertragungsstelle (95, 96; 151) des Druckkreises (120) mit zumindest einem Lager- und/oder Dichtelement (104) zwischen je zwei relativ zueinander bewegbaren Druckkreis-Bauteilen (102, 84; 110, 84; 153, 154) versehen ist.

9. Torsionsschwingungsdämpfer nach Anspruch 8,
**dadurch gekennzeichnet,**
**dass** die mit dem zumindest einen Lager- und/oder Dichtelement (104) ausgebildete wenigstens eine Druckübertragungsstelle (95, 96) des Druckkreises (120) von einer am antriebsseitigen Übertragungselement (88) angeformten Radialflanschnabe (36) radial umschlossen ist, und demnach als den Abtrieb (84) gegenüber dem Antrieb (1) zentrierende Pilotlagerung (116) wirksam ist.

10. Torsionsschwingungsdämpfer nach Anspruch 8 oder 9,
**dadurch gekennzeichnet,**
**dass** das Lager- und/oder Dichtelement (104) der jeweiligen Druckübertragungsstelle (95, 96; 151) die Funktion einer Abdichtung übernimmt.

11. Torsionsschwingungsdämpfer nach Anspruch 6 oder 7,
**dadurch gekennzeichnet,**
**dass** das dem Rotationsteil (156) des Antriebs (1) zugeordnete Druckkreis-Bauteil (154) über einen zur Aufnahme des antriebsseitigen Übertragungselementes (88) bestimmten Stützflansch (162) verfügt.
**dass**

12. Torsionsschwingungsdämpfer nach einem der Ansprüche 1-11,
**dadurch gekennzeichnet,**
**dass** dem Zusatzspeicherraum (132) ein Schwingkompressor (127) zugeordnet ist.

13. Torsionsschwingungsdämpfer nach einem der Ansprüche 1 bis 12,
**dadurch gekennzeichnet,**
**dass** der Versorgungsspeicher (136) mit einer Druckseite (D) einer Pumpe (138) und der Expansionsspeicher (144) mit einer ersten Saugseite (S1) der Pumpe (138) in Druckverbindung versetzbar ist.

14. Torsionsschwingungsdämpfer nach einem der Ansprüche 12 bis 13,
**dadurch gekennzeichnet,**
**dass** der Zusatzspeicherraum (132) über ein erstes Stellglied (122) mit dem Speicherraum (32) des Gasfedersystems (14) verbunden ist.

15. Torsionsschwingungsdämpfer nach einem der Ansprüche 12 bis 14,
**dadurch gekennzeichnet,**
**dass** der Zusatzspeicherraum (132) über ein zweites Stellglied (134) mit dem Versorgungsspeicher (136) verbunden ist.

16. Torsionsschwingungsdämpfer nach einem der Ansprüche 12 bis 15,
**dadurch gekennzeichnet,**
**dass** der Zusatzspeicherraum (132) über ein drittes Stellglied (142) mit dem Expansionsspeicher (144) oder mit der Umgebung (140) verbunden ist.

17. Torsionsschwingungsdämpfer nach Anspruch 16,
**dadurch gekennzeichnet,**
**dass** die Pumpe (138) mit ihrer ersten Saugseite (S1) über ein viertes Stellglied (146) mit dem Expansionsspeicher (144) verbunden ist.

18. Torsionsschwingungsdämpfer nach Anspruch 16 oder 17,
**dadurch gekennzeichnet,**
**dass** die Pumpe (138) mit einer zweiten Saugseite (S2) eine Zufuhr gasförmigen Mediums aus der Umgebung (140) bewirkt.

19. Torsionsschwingungsdämpfer nach einem der Ansprüche 14 bis 17,
**dadurch gekennzeichnet,**
**dass** zumindest eines der Stellglieder (122, 134, 142, 146) mit einer Steuerungs- und oder Regelungsvorrichtung (125) verbunden und durch diese bezüglich seiner jeweiligen Wirkposition einstellbar ist.

20. Torsionsschwingungsdämpfer nach einem der Ansprüche 1 bis 19 mit
einem das Gasfedersystem ergänzenden Zusatzfedersystem,
**dadurch gekennzeichnet,**
**dass** das Gasfedersystem (14) in Reihe mit einem Zusatzfedersystem (50) angeordnet ist.

21. Torsionsschwingungsdämpfer nach Anspruch 20,
**dadurch gekennzeichnet,**
**dass** der Antrieb (1) mit dem Gasfedersystem (14) und der Abtrieb (86) mit dem Zusatzfedersystem (50) in Wirkverbindung steht.

22. Torsionsschwingungsdämpfer nach Anspruch 20,
**dadurch gekennzeichnet,**
**dass** der Antrieb (1) mit dem Zusatzfedersystem (50) und der Abtrieb (86) mit dem Gasfedersystem (14) in Wirkverbindung steht.

23. Torsionsschwingungsdämpfer nach Anspruch 21 mit einem gegenüber
dem Antrieb drehfesten Radialflansch des antriebsseitigen Übertragungselementes,
**dadurch gekennzeichnet,**
**dass** ein den Speicherraum (32) des Gasfedersystems (14) beinhaltender Zylinderraum (12) zusammen mit der zum Speicherraum (32) führenden Zuleitung (100) mittels zumindest eines dem antriebsseitigen Übertragungselement (88) zugeordneten antriebsseitigen primären Ansteuerelementes (16) in Beaufschlagungsverbindung steht, ein gegenüber dem Zylinderraum (12) in Umfangsrichtung relativ bewegbarer Kolben (17) des Gasfedersystems (14) dagegen mit einem wenigstens ein abtriebsseitiges primäres Ansteuerelement (37) aufweisenden Zwischenübertragungselement (90).

24. Torsionsschwingungsdämpfer nach Anspruch 23,
**dadurch gekennzeichnet,**
**dass** das Zwischenübertragungselement (90) über ein antriebsseitiges sekundäres Ansteuerelement (49) mit dem Zusatzfedersystem (50) in Beaufschlagungsverbindung steht, und das Zusatzfedersystem (50) mit einem abtriebsseitigen sekundären Ansteuerelement (58) mit dem abtriebsseitigen Übertragungselement (92).

25. Torsionsschwingungsdämpfer nach Anspruch 23 oder 24,
**dadurch gekennzeichnet,**
**dass** das Zwischenübertragungselement (90) einen das Zusatzfedersystem (50) radial umschließenden und axial begrenzenden Aufnahmeraum (48) bildet.

26. Torsionsschwingungsdämpfer nach einem der Ansprüche 1 bis 19,
**dadurch gekennzeichnet,**
**dass** sowohl der Antrieb (1) als auch der Abtrieb (86) jeweils mit dem Gasfedersystem (14) in Wirkverbindung steht.

27. Torsionsschwingungsdämpfer nach einem der Ansprüche 20 bis 26,
**dadurch gekennzeichnet,**
**dass** das Zusatzfedersystem (50) im wesentlichen mit axialem Versatz gegenüber dem Gasfedersystem (14) angeordnet ist.

28. Torsionsschwingungsdämpfer nach einem der Ansprüche 20 bis 22,
**dadurch gekennzeichnet,**
**dass** das Zusatzfedersystem (50) im wesentlichen mit radialem Versatz gegenüber dem Gasfedersystem (14) angeordnet ist.

29. Torsionsschwingungsdämpfer nach einem der Ansprüche 23 bis 25 ,
**dadurch gekennzeichnet,**
**dass** der Kolben (17) des Gasfedersystems (14) über eine Kolbenstange (18) sowie über einen Kolbenstempel (25) verfügt.

30. Torsionsschwingungsdämpfer nach einem der Ansprüche 23 bis 25 oder 29,
**dadurch gekennzeichnet,**
**dass** der Kolben (17) des Gasfedersystems (14) mit seinem Kolbenstempel (25) einen im wesentlichen mit viskosem Medium befüllten Druckraum (27) beaufschlagt, wobei der Druckraum (27) an seiner vom Kolbenstempel (25) abgewandten Umfangsseite durch einen Trennkolben (30) begrenzt ist, an dessen vom Druckraum (27) abgewandter Seite sich der im wesentlichen mit gasförmigem Medium befüllte Speicherraum (32) anschließt.

31. Torsionsschwingungsdämpfer nach einem der Ansprüche 23 bis 25 oder 29 bis 30,
**dadurch gekennzeichnet,**
**dass** der Kolben (17) des Gasfedersystems (14) mit seiner Kolbenstange (18), die in einen Kolbenstangenraum (20) des Zylinderraums (12) ragt, eine im Zylinderraum (12) vorgesehene Abdichtung (26) durchgreift, wobei durch die Abdichtung (26) ein Austausch viskosen Mediums des Druckraums (27) und gasförmigen Mediums des Kolbenstangenraums (20) begrenzt ist, durch den Trennkolben (30) dagegen ein Austausch viskosen Mediums des Druckraumes (27) und gasförmigen Mediums des Speicherraums (32).

32. Torsionsschwingungsdämpfer nach Anspruch 31,
**dadurch gekennzeichnet,**
**dass** der Zylinderraum (12) des Gasfedersystems (14) ebenso wie die Kolbenstange (18) in Umfangsrichtung im wesentlichen kreissegmentförmig ausgebildet sind.

33. Torsionsschwingungsdämpfer nach einem der Ansprüche 30 bis 32,
**dadurch gekennzeichnet,**
**dass** der Speicherraum (32) des Gasfedersystems (14) unter Umgehung des Druckraumes (27) über eine Drosselverbindung (148) mit dem Kolbenstangenraum (20) verbunden ist.

34. Torsionsschwingungsdämpfer nach Anspruch 33,
**dadurch gekennzeichnet,**
**dass** die Drosselverbindung (148) bezüglich ihrer Drosselwirkung über ein Stellelement (150) einstellbar ist.

35. Torsionsschwingungsdämpfer nach Anspruch 34,
**dadurch gekennzeichnet,**
**dass** das Stellelement (150) der Drosselverbindung (148) mit der Steuerungs- und/oder Regelungsvorrichtung (125) verbunden ist.

36. Torsionsschwingungsdämpfer nach einem der Ansprüche 1 bis 35,
**dadurch gekennzeichnet,**
**dass** der Zylinderraum (12) des Gasfedersystems (14) im Querschnitt im wesentlichen kreisförmig, elliptisch oder polygon ausgebildet und der Kolbenstempelrand (24) an die Form des Zylinderraums (12) angepasst ist.

37. Torsionsschwingungsdämpfer nach einem der Ansprüche 13 bis 36,
**dadurch gekennzeichnet,**
**dass** als gasförmiges Medium zur Befüllung des Gasfedersystems (14) Druckluft vorgesehen ist, die aus einer Druckluftquelle (170) beziehbar oder durch die Pumpe (138) mittels deren zweiter Saugseite (S2) aus der Umgebung (140) entnehmbar ist.

## Claims

1. Torsional vibration damper, having a drive-side transmission element which is connected to a drive, an output-side transmission element which can be brought into an operative connection with an output and can be deflected rotationally with respect to the drive-side transmission element, and a damping device which is provided between the two transmission elements with at least one pneumatic spring system which serves to transmit a torque between the drive-side and the output-side transmission element and has a reservoir space which contains a gaseous medium, the reservoir space (32) of the pneumatic spring system (14) being connected to a pressure circuit (120), by way of which, at least in the case of a modification of the torque to be transmitted by the pneumatic spring system (14), an adaptation of the characteristic curve of the pneumatic spring system (14) to the modified torque can be triggered at least substantially by means of a resetting of the pressure which prevails in the reservoir space (32), **characterized in that** the pressure circuit (120) has an additional reservoir space (132) which can be brought into a pressure connection with the reservoir space (32) of the pneumatic spring system (14), and **in that** the additional reservoir space (132) can be set into a pressure connection with a supply reservoir (136) for gaseous medium or with an expansion reservoir (144) for gaseous medium.

2. Torsional vibration damper according to Claim 1, **characterized in that** the pressure circuit (120) has at least one pressure transmission point (95, 96; 151) between two pressure circuit components (101, 84; 109, 84; 153, 154) which can be moved relative to one another.

3. Torsional vibration damper according to Claim 2, **characterized in that** at least one feed line (100) of the pressure circuit (120) is in a pressure connection via a first pressure transmission point (95) to the output (86), and the latter is in a pressure connection via a second pressure transmission point (96) with at least one feed line (34) which leads into the reservoir space (32) of the pneumatic spring system (14).

4. Torsional vibration damper according to Claim 2 or 3, **characterized in that** a pressure circuit component (101) of the first pressure transmission point (95) is part of a first rotary leadthrough (98) which is in a pressure connection with the pressure circuit (120) and, furthermore, is assigned the output (86) or a component (84) which belongs to the latter.

5. Torsional vibration damper according to Claim 3, **characterized in that** a pressure circuit component (109) of the second pressure transmission point (96) is part of a second the rotary leadthrough (114) which is in a pressure connection with the reservoir space (32) of the pneumatic spring system (14) and, furthermore, is assigned the output (86) or a component (84) which is assigned to the latter.

6. Torsional vibration damper according to Claim 2, **characterized in that** a first pressure circuit component (153) of an individual pressure transmission point (151) is assigned to a stationary part (155) of the drive (1) and is in a pressure connection with the pressure circuit (120), whereas a second pressure circuit component (154) of the individual pressure transmission point (151) is assigned to a rotational part (156) of the drive (1) and establishes a flow connection with the reservoir space (32) of the pneumatic spring system (14).

7. Torsional vibration damper according to Claim 6 having a drive which is formed by way of an internal combustion engine and the housing of which acts as a stationary part and the crankshaft of which acts as a rotational part, **characterized in that** the housing (157) is in a pressure connection with the pressure circuit (120), and the crankshaft (3) is in a pressure connection with the reservoir space (32) of the pneumatic spring system (14).

8. Torsional vibration damper according to one of Claims 2 to 7, **characterized in that** the at least one pressure transmission point (95, 96; 151) of the pressure circuit (120) is provided with at least one bearing and/or sealing element (104) between in each case two pressure circuit components (102, 84; 110, 84; 153, 154) which can be moved relative to one another.

9. Torsional vibration damper according to Claim 8, **characterized in that** the at least one pressure transmission point (95, 96) of the pressure circuit (120), which at least one pressure transmission point (95, 96) is configured with the at least one bearing and/or sealing element (104), is enclosed radially by a radial flange hub (36) which is integrally formed on the drive-side transmission element (88), and accordingly acts as a pilot bearing (116) which centres the output (84) with respect to the drive (1).

10. Torsional vibration damper according to Claim 8 or 9, **characterized in that** the bearing and/or sealing element (104) of the respective pressure transmission point (95, 96; 151) assumes the function of a seal.

11. Torsional vibration damper according to Claim 6 or 7, **characterized in that** the pressure circuit component (154) which is assigned to the rotational part (156) of the drive (1) has a supporting flange (162) which is intended to receive the drive-side transmission element (88) .

12. Torsional vibration damper according to one of Claims 1 to 11, **characterized in that** the additional reservoir space (132) is assigned an oscillating compressor (127).

13. Torsional vibration damper according to one of Claims 1 to 12, **characterized in that** the supply reservoir (136) can be set in a pressure connection with a pressure side (D) of a pump (138), and the expansion reservoir (144) can be set in a pressure connection with a first suction side (S1) of the pump (138) .

14. Torsional vibration damper according to either of Claims 12 and 13, **characterized in that** the additional reservoir space (132) is connected via a first actuator (122) to the reservoir space (32) of the pneumatic spring system (14).

15. Torsional vibration damper according to one of Claims 12 to 14, **characterized in that** the additional reservoir space (132) is connected via a second actuator (134) to the supply reservoir (136).

16. Torsional vibration damper according to one of Claims 12 to 15, **characterized in that** the additional reservoir space (132) is connected via a third actuator (142) to the expansion reservoir (144) or to the surroundings (140).

17. Torsional vibration damper according to Claim 16, **characterized in that** the pump (138) is connected by way of its first suction side (S1) via a fourth actuator (146) to the expansion reservoir (144).

18. Torsional vibration damper according to Claim 16 or 17, **characterized in that** the pump (138) brings about a feed of gaseous medium from the surroundings (140) by way of a second suction side (S2).

19. Torsional vibration damper according to one of Claims 14 to 17, **characterized in that** at least one of the actuators (122, 134, 142, 146) is connected to a control and/or regulating apparatus (125), and can be set by way of the latter with regard to its respective active position.

20. Torsional vibration damper according to one of Claims 1 to 19 having an additional spring system which supplements the pneumatic spring system, **characterized in that** the pneumatic spring system (14) is arranged in series with an additional spring system (50).

21. Torsional vibration damper according to Claim 20, **characterized in that** the drive (1) is in an operative connection with the pneumatic spring system (14), and the output (86) is in an operative connection with the additional spring system (50).

22. Torsional vibration damper according to Claim 20, **characterized in that** the drive (1) is in an operative connection with the additional spring system (50), and the output (86) is in an operative connection with the pneumatic spring system (14).

23. Torsional vibration damper according to Claim 21 having a radial flange of the drive-side transmission element, which radial flange is fixed with respect to the drive so as to rotate with it, **characterized in that** a cylinder space (12) which contains the reservoir space (32) of the pneumatic spring system (14) is in a loading connection together with the feed line (100) which leads to the reservoir space (32), by means of at least one drive-side primary actuating element (16) which is assigned to the drive-side transmission element (88), and, in contrast, a piston (17) of the pneumatic spring system (14), which piston (17) can be moved relative to the cylinder space (12) in the circumferential direction, is in a loading connection with an intermediate transmission element (90) which has at least one output-side primary actuating element (37) .

24. Torsional vibration damper according to Claim 23, **characterized in that** the intermediate transmission element (90) is in a loading connection via a drive-side secondary actuating element (49) with the additional spring system (50), and the additional spring system (50) is in a loading connection with the output-side transmission element (92) by way of an output-side secondary actuating element (58).

25. Torsional vibration damper according to Claim 23 or 24, **characterized in that** the intermediate transmission element (90) forms a receiving space (48) which radially encloses and axially delimits the additional spring system (50).

26. Torsional vibration damper according to one of Claims 1 to 19, **characterized in that** both the drive (1) and the output (86) are in an operative connection in each case with the pneumatic spring system (14).

27. Torsional vibration damper according to one of Claims 20 to 26, **characterized in that** the additional spring system (50) is arranged substantially with an axial offset with respect to the pneumatic spring system (14).

28. Torsional vibration damper according to one of Claims 20 to 22, **characterized in that** the additional spring system (50) is arranged substantially with a radial offset with respect to the pneumatic spring system (14).

29. Torsional vibration damper according to one of Claims 23 to 25, **characterized in that** the piston (17) of the pneumatic spring system (14) has a piston rod (18) and a piston plunger (25).

30. Torsional vibration damper according to one of Claims 23 to 25 or 29, **characterized in that**, by way of its piston plunger (25), the piston (17) of the pneumatic spring system (14) loads a pressure space (27) which is filled substantially with viscous medium, the pressure space (27) being delimited on its circumferential side which faces away from the piston plunger (25) by way of a separating piston (30), the side of which, which faces away from the pressure space (27), is adjoined by the reservoir space (32) which is filled substantially with gaseous medium.

31. Torsional vibration damper according to one of Claims 23 to 25 or 29 to 30, **characterized in that** the piston (17) of the pneumatic spring system (14) reaches through a seal (26) which is provided in the cylinder space (12) with its piston rod (18) which protrudes into a piston rod space (20) of the cylinder space (12), an exchange of viscous medium of the pressure space (27) and gaseous medium of the piston rod space (20) being limited by way of the seal (26), and in contrast an exchange of viscous medium of the pressure space (27) and gaseous medium of the reservoir space (32) being limited by way of the separating piston (30) .

32. Torsional vibration damper according to Claim 31, **characterized in that** the cylinder space (12) of the pneumatic spring system (14) as well as the piston rod (18) are of substantially circular segment-shaped configuration in the circumferential direction.

33. Torsional vibration damper according to one of Claims 30 to 32, **characterized in that** the reservoir space (32) of the pneumatic spring system (14) is connected via a throttle connection (148) to the piston rod space (20), bypassing the pressure space (27).

34. Torsional vibration damper according to Claim 33, **characterized in that** the throttle action of the throttle connection (148) can be set via an setting element (150).

35. Torsional vibration damper according to Claim 34, **characterized in that** the setting element (150) of the throttle connection (148) is connected to the control and/or regulating apparatus (125).

36. Torsional vibration damper according to one of Claims 1 to 35, **characterized in that** the cylinder space (12) of the pneumatic spring system (14) is of substantially circular, elliptical or polygonal configuration in cross section, and the piston plunger edge (24) is adapted to the shape of the cylinder space (12) .

37. Torsional vibration damper according to one of Claims 13 to 36, **characterized in that** compressed air which can be obtained from a compressed air source (170) or can be removed from the surroundings (140) by way of the pump (138) by means of its second suction side (S2) is provided as gaseous medium for filling the pneumatic spring system (14).

## Revendications

1. Amortisseur de vibrations de torsion, présentant un élément de transmission côté entraînement relié à un entraînement, un élément de transmission côté sortie pouvant être mis en liaison active avec une sortie et pouvant être dévié de façon rotative par rapport à l'élément de transmission côté entraînement, et un dispositif d'amortissement prévu entre les deux éléments de transmission avec au moins un système de ressort pneumatique, qui sert pour la transmission d'un couple entre l'élément de transmission côté entraînement et l'élément de transmission côté sortie et qui comporte une chambre d'accumulation contenant un milieu gazeux,
dans lequel la chambre d'accumulation (32) du système de ressort pneumatique (14) est raccordée à un circuit de pression (120), par lequel au moins lors d'une modification du couple à transmettre par le système de ressort pneumatique (14) au moins essentiellement une adaptation de la courbe caractéristique du système de ressort pneumatique (14) au couple modifié peut être opérée au moyen d'un nouveau réglage de la pression régnant dans la chambre d'accumulation (32), **caractérisé en ce que** le circuit de pression (120) comporte une chambre d'accumulation supplémentaire (132) pouvant être mise en relation de pression avec la chambre d'accumulation (32) du système de ressort pneumatique (14), et **en ce que** la chambre d'accumulation supplémentaire (132) peut être raccordée en relation de pression à un réservoir d'alimentation (136) pour un milieu gazeux ou à un réservoir de détente (144) pour un milieu gazeux.

2. Amortisseur de vibrations de torsion selon la revendication 1, **caractérisé en ce que** le circuit de pression (120) présente au moins un point de transmission de pression (95, 96; 151) entre deux composants du circuit de pression déplaçables l'un par rapport à l'autre (101, 84; 109, 84; 153, 154).

3. Amortisseur de vibrations de torsion selon la revendication 2, **caractérisé en ce qu'**au moins une conduite d'alimentation (100) du circuit de pression (120) est en relation de pression avec la sortie (86) par un premier point de transmission de pression (95) et est en relation de pression par un deuxième point de transmission de pression (96) avec au moins une conduite d'alimentation (34) menant dans la chambre d'accumulation (32) du système de ressort pneumatique (14) .

4. Amortisseur de vibrations de torsion selon la revendication 2 ou 3, **caractérisé en ce qu'**un composant de circuit de pression (101) du premier point de transmission de pression (95) fait partie d'un premier passage rotatif (98) se trouvant en relation de pression avec le circuit de pression (120), auquel est en outre associé(e) la sortie (86) ou un composant (84) appartenant à celle-ci.

5. Amortisseur de vibrations de torsion selon la revendication 3, **caractérisé en ce qu'**un composant de circuit de pression (109) du deuxième point de transmission de pression (96) fait partie d'un deuxième passage rotatif (114) se trouvant en relation de pression avec la chambre d'accumulation (32) du système de ressort pneumatique (14), auquel est en outre associé (e) la sortie (86) ou un composant (84) appartenant à celle-ci.

6. Amortisseur de vibrations de torsion selon la revendication 2, **caractérisé en ce qu'**un premier composant de circuit de pression (153) d'un unique point de transmission de pression (151) est associé à une partie stationnaire (155) de l'entraînement (1) et est en relation de pression avec le circuit de pression (120), tandis qu'un deuxième composant de circuit de pression (154) de l'unique point de transmission de pression (151) est associé à une partie tournante (156) de l'entraînement (1) et établit une liaison d'écoulement avec la chambre d'accumulation (32) du système de ressort pneumatique (14).

7. Amortisseur de vibrations de torsion selon la revendication 6 avec un entraînement formé par un moteur à combustion interne, dont le boîtier fait office de partie stationnaire et dont le vilebrequin fait office de partie tournante, **caractérisé en ce que** le boîtier (157) est en relation de pression avec le circuit de pression (120) et le vilebrequin (3) est en relation de pression avec la chambre d'accumulation (32) du système de ressort pneumatique (14).

8. Amortisseur de vibrations de torsion selon l'une quelconque des revendications 2 à 7, **caractérisé en ce que** ledit au moins un point de transmission de pression (95, 96; 151) du circuit de pression (120) est muni d'au moins un élément de palier et/ou d'étanchéité (104) entre chaque fois deux composants de circuit de pression (102, 84; 110, 84; 153, 154) mobiles l'un par rapport à l'autre.

9. Amortisseur de vibrations de torsion selon la revendication 8, **caractérisé en ce que** ledit au moins un point de transmission de pression (95, 96) du circuit de pression (120) formé avec ledit au moins un élément de palier et/ou d'étanchéité (104) est entouré radialement par un moyeu de bride radiale (36) formé sur l'élément de transmission côté entraînement (88), et est de ce fait actif comme palier pilote (116) de centrage de la sortie (84) par rapport à l'entraînement (1) .

10. Amortisseur de vibrations de torsion selon la revendication 8 ou 9, **caractérisé en ce que** l'élément de palier et/ou d'étanchéité (104) du point de transmission de pression respectif (95, 96; 151) assure la fonction d'un joint d'étanchéité.

11. Amortisseur de vibrations de torsion selon la revendication 6 ou 7, **caractérisé en ce que** le composant de circuit de pression (154) associé à la partie tournante (156) de l'entraînement (1) comporte une bride d'appui (162) destinée à recevoir l'élément de transmission côté entraînement (88).

12. Amortisseur de vibrations de torsion selon l'une quelconque des revendications 1 à 11, **caractérisé en ce qu'**un compresseur vibrant (127) est associé à la chambre d'accumulation supplémentaire (132).

13. Amortisseur de vibrations de torsion selon l'une quelconque des revendications 1 à 12, **caractérisé en ce que** le réservoir d'alimentation (136) peut être mis en relation de pression avec un côté de refoulement (D) d'une pompe (138) et le réservoir de détente (144) peut être mis en relation de pression avec un premier côté d'aspiration (S1) de la pompe (138).

14. Amortisseur de vibrations de torsion selon une des revendications 12 à 13, **caractérisé en ce que** la chambre d'accumulation supplémentaire (132) est reliée à la chambre d'accumulation (32) du système de ressort pneumatique (14) par l'intermédiaire d'un premier organe de réglage (122).

15. Amortisseur de vibrations de torsion selon l'une quelconque des revendications 12 à 14, **caractérisé en ce que** la chambre d'accumulation supplémentaire (132) est reliée au réservoir d'alimentation (136) par l'intermédiaire d'un deuxième organe de réglage (134).

16. Amortisseur de vibrations de torsion selon l'une quelconque des revendications 12 à 15, **caractérisé en ce que** la chambre d'accumulation supplémentaire (132) est reliée au réservoir de détente (144) ou à l'atmosphère (140) par l'intermédiaire d'un troisième organe de réglage (142).

17. Amortisseur de vibrations de torsion selon la revendication 16, **caractérisé en ce que** la pompe (138) est reliée par son premier côté d'aspiration (S1) au réservoir de détente (144) par l'intermédiaire d'un quatrième organe de réglage (146).

18. Amortisseur de vibrations de torsion selon la revendication 16 ou 17, **caractérisé en ce que** la pompe (138) assure par un deuxième côté d'aspiration (S2) une arrivée de milieu gazeux à partir de l'atmosphère (140) .

19. Amortisseur de vibrations de torsion selon l'une quelconque des revendications 14 à 17, **caractérisé en ce qu'**au moins un des organes de réglage (122, 134, 142, 146) est relié à un dispositif de commande et/ou de régulation (125) et peut être réglé par celui-ci en ce qui concerne sa position active respective.

20. Amortisseur de vibrations de torsion selon l'une quelconque des revendications 1 à 19 avec un système de ressort supplémentaire complétant le système de ressort pneumatique, **caractérisé en ce que** le système de ressort pneumatique (14) est disposé en série avec un système de ressort supplémentaire (50).

21. Amortisseur de vibrations de torsion selon la revendication 20, **caractérisé en ce que** l'entraînement (1) est en liaison active avec le système de ressort pneumatique (14) et la sortie (86) est en liaison active avec le système de ressort supplémentaire (50).

22. Amortisseur de vibrations de torsion selon la revendication 20, **caractérisé en ce que** l'entraînement (1) est en liaison active avec le système de ressort supplémentaire (50) et la sortie (86) est en liaison active avec le système de ressort pneumatique (14).

23. Amortisseur de vibrations de torsion selon la revendication 21 avec une bride radiale de l'élément de transmission côté entraînement calée en rotation par rapport à l'entraînement, **caractérisé en ce qu'**une chambre de cylindre (12) contenant la chambre d'accumulation (32) du système de ressort pneumatique (14) est en relation d'actionnement avec la conduite d'alimentation (100) menant à la chambre d'accumulation (32) au moyen d'au moins un élément de commande primaire côté entraînement (16) associé à l'élément de transmission côté entraînement (88), et un piston (17) du système de ressort pneumatique (14), mobile par rapport à la chambre de cylindre (12) en direction périphérique est au contraire en relation d'actionnement avec un élément de transmission intermédiaire (90) présentant au moins un élément de commande primaire côté sortie (37).

24. Amortisseur de vibrations de torsion selon la revendication 23, **caractérisé en ce que** l'élément de transmission intermédiaire (90) est en relation d'actionnement avec le système de ressort supplémentaire (50) par l'intermédiaire d'un élément de commande secondaire côté entraînement (49), et le système de ressort supplémentaire (50) est en relation d'actionnement avec l'élément de transmission côté sortie (92) par un élément de commande secondaire côté sortie (58).

25. Amortisseur de vibrations de torsion selon la revendication 23 ou 24, **caractérisé en ce que** l'élément de transmission intermédiaire (90) forme une chambre de réception (48) entourant radialement et limitant axialement le système de ressort supplémentaire (50).

26. Amortisseur de vibrations de torsion selon l'une quelconque des revendications 1 à 19, **caractérisé en ce qu'**aussi bien l'entraînement (1) que la sortie (86) est en liaison active respectivement avec le système de ressort pneumatique (14).

27. Amortisseur de vibrations de torsion selon l'une quelconque des revendications 20 à 26, **caractérisé en ce que** le système de ressort supplémentaire (50) est disposé essentiellement avec un décalage axial par rapport au système de ressort pneumatique (14).

28. Amortisseur de vibrations de torsion selon l'une quelconque des revendications 20 à 22, **caractérisé en ce que** le système de ressort supplémentaire (50) est disposé essentiellement avec un décalage radial par rapport au système de ressort pneumatique (14).

29. Amortisseur de vibrations de torsion selon l'une quelconque des revendications 23 à 25, **caractérisé en ce que** le piston (17) du système de ressort pneumatique (14) comporte une tige de piston (18) ainsi qu'un poussoir de piston (25).

30. Amortisseur de vibrations de torsion selon l'une quelconque des revendications 23 à 25 ou 29, **caractérisé en ce que** le piston (17) du système de ressort pneumatique (14) agit avec son poussoir de piston (25) sur une chambre de pression (27) remplie essentiellement d'un milieu visqueux, dans lequel la chambre de pression (27) est limitée sur son côté périphérique détourné du poussoir de piston (25) par un piston de séparation (30), dont le côté détourné de la chambre de pression (27) est raccordé à la chambre d'accumulation (32) essentiellement remplie de milieu gazeux.

31. Amortisseur de vibrations de torsion selon l'une quelconque des revendications 23 à 25 ou 29 à 30, **caractérisé en ce que** le piston (17) du système de ressort pneumatique (14) traverse avec sa tige de piston (18), qui pénètre dans une chambre de tige de piston (20) de la chambre de cylindre (12), un élément d'étanchéité (26) prévu dans la chambre de cylindre (12), dans lequel un échange de milieu visqueux de la chambre de pression (27) et de milieu gazeux de la chambre de tige de piston (20) est limité par l'élément d'étanchéité (26), et un échange de milieu visqueux de la chambre de pression (27) et de milieu gazeux de la chambre d'accumulation (32) est au contraire limité par le piston de séparation (30).

32. Amortisseur de vibrations de torsion selon la revendication 31, **caractérisé en ce que** la chambre de cylindre (12) du système de ressort pneumatique (14) ainsi que la tige de piston (18) sont réalisées essentiellement en forme de segment de cercle dans la direction périphérique.

33. Amortisseur de vibrations de torsion selon l'une quelconque des revendications 30 à 32, **caractérisé en ce que** la chambre d'accumulation (32) du système de ressort pneumatique (14) est reliée à la chambre de tige de piston (20) en contournant la chambre de pression (27) au moyen d'une liaison à étranglement (148).

34. Amortisseur de vibrations de torsion selon la revendication 33, **caractérisé en ce que** la liaison à étranglement (148) est réglable au niveau de son effet d'étranglement au moyen d'un élément de réglage (150).

35. Amortisseur de vibrations de torsion selon la revendication 34, **caractérisé en ce que** l'élément de réglage (150) de la liaison à étranglement (148) est relié au dispositif de commande et/ou de régulation (125).

36. Amortisseur de vibrations de torsion selon l'une quelconque des revendications 1 à 35, **caractérisé en ce que** la chambre de cylindre (12) du système de ressort pneumatique (14) présente une section transversale de forme essentiellement circulaire, elliptique ou polygonale, et le bord du poussoir de piston (24) est adapté à la forme de la chambre de cylindre (12).

37. Amortisseur de vibrations de torsion selon l'une quelconque des revendications 13 à 36, **caractérisé en ce qu'**il est prévu comme milieu gazeux pour remplir le système de ressort pneumatique (14) de l'air comprimé, qui peut être obtenu à partir d'une source d'air comprimé (170) ou qui peut être prélevé dans l'atmosphère (140) par la pompe (138) au moyen de son deuxième côté d'aspiration (S2).
